(19)

**Europäisches Patentamt**
**European Patent Office**
**Office européen des brevets**

(11)   **EP 3 588 128 B1**

(12)   **EUROPEAN PATENT SPECIFICATION**

(45) Date of publication and mention
of the grant of the patent:
**10.08.2022   Bulletin 2022/32**

(51) International Patent Classification (IPC):
**G01S 13/931** (2020.01)      **G01S 7/41** (2006.01)
**G01S 13/90** (2006.01)

(21) Application number: **18179827.3**

(22) Date of filing: **26.06.2018**

(52) Cooperative Patent Classification (CPC):
**G01S 13/931; G01S 7/411; G01S 13/9004**

(54) **METHOD FOR DETECTION AND HEIGHT AND AZIMUTH ESTIMATION OF OBJECTS IN A SCENE BY RADAR PROCESSING USING SPARSE RECONSTRUCTION WITH COHERENT AND INCOHERENT ARRAYS**

VERFAHREN ZUR DETEKTION UND HÖHEN- UND AZIMUT-SCHÄTZUNG VON OBJEKTEN IN EINER SZENE DURCH RADARVERARBEITUNG UNTER VERWENDUNG EINER SPÄRLICHEN REKONSTRUKTION MIT KOHÄRENTEN UND INKOHÄRENTEN ANORDNUNGEN

PROCÉDÉ DE DÉTECTION ET D'ESTIMATION DE HAUTEUR ET D'AZIMUT D'OBJETS DANS UNE SCÈNE PAR TRAITEMENT RADAR UTILISANT UNE RECONSTRUCTION ÉPARSE COMPORTANT DES RÉSEAUX COHÉRENTS ET INCOHÉRENTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.01.2020   Bulletin 2020/01**

(73) Proprietor: **Fraunhofer-Gesellschaft zur Förderung**
**der angewandten Forschung e.V.**
**80686 München (DE)**

(72) Inventors:
  • **Gonzalez Huici, Maria Antonia**
    **53123 Bonn (DE)**
  • **Mateos-Nunez, David**
    **53177 Bonn (DE)**
  • **Simoni, Renato**
    **53111 Bonn (DE)**
  • **Greiff, Christian**
    **53179 Bonn (DE)**
  • **Correas Serrano, Aitor**
    **53115 Bonn (DE)**

(74) Representative: **Gagel, Roland**
**Patentanwaltskanzlei**
**Dr. Roland Gagel**
**Landsberger Strasse 480 a**
**81241 München (DE)**

(56) References cited:
  • **Aitor Correas Serrano ET AL: "Compressed sensing based high-resolution DoA estimation for automotive radar with real measurements", , 29 September 2017 (2017-09-29), XP055519510, Retrieved from the Internet: URL:http://repositorio.upct.es/bitstream/h andle/10317/6185/tfm-cor-com.pdf?sequence= 1 [retrieved on 2018-10-26]**
  • **OLBRICH SEBASTIAN ET AL: "A multipath based height estimation of targets for radar systems", 2017 IEEE MTT-S INTERNATIONAL CONFERENCE ON MICROWAVES FOR INTELLIGENT MOBILITY (ICMIM), IEEE, 19 March 2017 (2017-03-19), pages 37-40, XP033091977, DOI: 10.1109/ICMIM.2017.7918850 [retrieved on 2017-05-03]**
  • **HERMAN M A ET AL: "High-Resolution Radar via Compressed Sensing", IEEE TRANSACTIONS ON SIGNAL PROCESSING, IEEE SERVICE CENTER, NEW YORK, NY, US, vol. 57, no. 6, 1 June 2009 (2009-06-01), pages 2275-2284, XP011250552, ISSN: 1053-587X**
  • **ROSSI MARCO ET AL: "Spatial Compressive Sensing for MIMO Radar", IEEE TRANSACTIONS ON SIGNAL PROCESSING, IEEE SERVICE CENTER, NEW YORK, NY, US, vol. 62, no. 2, 1 January 2014 (2014-01-01), pages 419-430, XP011536432, ISSN: 1053-587X, DOI: 10.1109/TSP.2013.2289875 [retrieved on 2013-12-31]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The present invention relates to a method and a system for detection and height and azimuth estimation of objects in a scene by radar processing using sparse reconstruction, in particular for advanced driver assistance systems (ADAS) and autonomous vehicles.

Radar systems for height and azimuth estimation have crucial importance for collision avoidance systems in motor-vehicles, because they work in most weather and lighting conditions, allow radial velocity estimation via Doppler measurements, and can provide high spatial resolution at ranges up to 200 m. In particular, at high speeds, collision avoidance decisions need to be made at distances larger than 80 m regarding the presence of obstacles. This requires an estimation of the dimensions of small objects on the road at long distances, e.g. at distances between 80 m and 150 m, where radar data can be collected and processed to determine if the obstacle can be driven over or needs to be avoided.

PRIOR ART ON HEIGHT ESTIMATION IN AUTOMOTIVE RADAR

The problem of height estimation in the context of automotive radar up to now has been addressed in two scenarios. A first scenario is the detection of small objects, e.g. curbs, or classification of larger objects, e.g., poles, at short distances of 1 to 5 m, related to the problem of parking (Olbrich, et al., 2017) (Laribi, et al., 2017) (Laribi, et al., 2018). The second scenario is the detection of high objects like bridges and gates at far distances of 50 to 200 m, related to the problem of classification of objects as in-path versus over-pass (Diewald, et al., 2011) (Engels, et al., 2017), and the height estimation of gates (Laribi, et al., 2017).

Regarding academic publications, for the case of interest the closest works are (Diewald, et al., 2011) and (Engels, et al., 2017) because they consider potential obstacles at medium-long distances of 50 to 200m, although they are suitable only for high targets (above 1 to 3m) like bridges. In particular, these works are insufficient for detection and height estimation of small objects because of the following reasons: The method in (Diewald, et al., 2011) combines measurements across different distances and uses the principle of the periodicity of the interference pattern in the envelope of the multi-path signal for a onescatterer model under the transformation of inverse distance, and employs Fast Fourier Transforms (FFTs) to extract the peak in the power spectral density that in turn is related to the height. The reasons this method is insufficient for the task at hand are the following: i) the number of cycles of the interference pattern is even less than one for small and distant targets, making the power spectral density estimation a challenge even for parametric models like Burg method; ii) the DC component (or average component) introduces a disturbance because it is unknown; and iii) a second scatterer changes the relationship of frequency to height, in other words, the model is highly dependent on the number of scatterers. The fact that this method uses amplitude or power information and not phases across an array of antennas is an important caveat for extensions to the case of interest. The method in (Engels, et al., 2017) uses maximum likelihood estimates and hypothesis-testing for model selection between three categories, one or two targets, and a one-target model in the presence of multipath. It is still insufficient for low targets because specular reflections under a far-field model of independent angles for direct and indirect propagation paths affects accuracy and resolution (Engels, et al., 2017). Moreover, this work does not combine measurements along the trajectory of the vehicle or from different sensors, and a single measurement may be insufficient using an array of practical number of elements and dimensions for automotive radar.

A. Correas-Serrano, "Compressed Sensing based high-resolution DOA estimation for automotive radar with real measurements", Repositorio digital, Universidad Politecnica de Cartagena. - September 2017 - http://repositorio.upct.es/bitstream/handle/10317/6185/tfm-cor-com.pdf? sequence=1, presents an evaluation with real measurements of the known approach of Compressed Sensing for DoA estimation, i.e., framing it as a frequency estimation problem using a partial Fourier over-complete dictionary and applying well-known methods such as Basis Pursuit De-noise and Orthogonal matching pursuit to sparse array measurements. The radar system employed in this work is a MIMO system which is also standard for DoA estimation. While DoA estimation as a frequency estimation problem has been widely studied, even in the context of sparse reconstruction, the choice that we make of coupling the direction of arrival of each of the road-reflected multi-path contributions and relating them with a hypothesis of height, leads to dictionary elements that are not complex sinusoids. This has the effect of increasing the resolution, and also allowing approaches for simultaneous estimation of the reflection coefficient of the road.

S. Olbrich et al., "A multipath based height estimation of targets for radar systems", IEEE International Conference on Microwaves for Intelligent Mobility (ICMIM), 2017, S. 37-40, propose a near-field multipath model but instead of considering amplitudes and phases across and array, it uses information only of amplitude, and compares the difference in power measured by the antennas of the array across distance to the target. This approach is valid for anomaly detection of close targets and does not provide the means for accurate estimation of the actual dimensions, much less at far distances.

Regarding patents, US 8,390,507 B2 describes a radar system with elevation measuring capability. The sensor setup and method for elevation estimation is based on phase differences across a uniform array with horizontal and vertical diversity. In particular, the elevation is estimated via a direct computation of phase differences of the spectral values associated to the azimuth frequency-bin of interest (cf. [0018]) using measurements from sets of antennas displaced vertically. This computation corresponds to a far-field signal model for direction of arrival (DoA) in the simplest and most inexpensive way. Some assertions are made regarding the evolution of the aforementioned quantity along the trajectory of the vehicle toward the approaching target in an analogous fashion as the evolution of the amplitude in (Diewald, et al., 2011) due to the interference pattern of the direct and ground-reflected contributions, but these statements are only qualitative (cf. [0116] and [0117]) and are therefore limited to classification criteria of small and big obstacles. The described method may be sufficient for detection or classification of big objects such as bridges, signs or the end of a traffic jam, but is not able to produce a reliable estimate of the height of small objects at far distances.

The present invention uses sparse reconstruction and group-sparsity models, which themselves have been applied successfully to radar problems. Next, we include a review of academic publications and patents in the subject and some preliminaries and notations.

PRIOR ART IN COMPRESSED SENSING AND GROUP-SPARSE RECONSTRUCTION

Sparse reconstruction is a technique developed for signal representation or estimation (denoising, compressing, restoring) under a sparsity assumption in some representation domain (Mallat, et al., 1993) (Gorodnitsky, et al., 1997) (Chen, et al., 1998) and has become part of the more recent Compressed Sensing framework articulated by (Donoho, 2006) with the premise of exploiting the sparsity/compressibility structure of the signal to reduce the number of samples at the measurement or sensing level; see e.g., (Duarte, et al., 2011) for a comprehensive review. These concepts soon found applications in radar signal processing (Baraniuk, et al., 2007) (Herman, et al., 2008) (Herman, et al., 2009), including MIMO radar (Chen, et al., 2008), and were promptly legitimated from an engineering perspective for its potential to reduce sampling rate, memory and computational load, and therefore weight, power and cost of real radar systems (Ender, 2010) (Baransky, et al., 2014). Advantages of this framework include (i) modeling flexibility for several estimation tasks; (ii) availability of efficient optimization approaches based on convex relaxations (more details in next section); (iii) good performance under sub-Nyquist sampling, e.g., using sparse random MIMO arrays (Rossi, et al., 2014), where the product of Tx and Rx elements grows logarithmically with the aperture and linearly with the number of sources that can be resolved, or using optimized sparse arrays according to information-theoretic metrics (Gonzalez-Huici, et al., 2018); and (iv) super-resolution capabilities (Candès, et al., 2014), e.g., in SAR (Zhu, et al., 2011), ISAR (Wu, et al., 2011), and in DoA estimation with a single snapshot (Fortunati, et al., 2014).

Regarding patents, the CS framework has been applied in US9274221B2 to temporal signal processing for automotive radar, especially for range estimation, but this work is not explicit about means and observation models for spatial processing, i.e., for angular elevation or height estimation. The patent US9389305B2 considers a method and system for array processing based on CS using as channels arbitrary combinations of the outputs from antennas arranged in a uniform linear grid, which are then interpreted under a far-field model for DoA estimation. This work does not consider any observation model for height estimation based on multi-path signals or any strategy to increase resolution based on group-(or block-)sparsity models for combining incoherent data along the trajectory or from multiple incoherent arrays.

Group-sparse reconstruction is an extension of standard sparsity and increases the modeling flexibility of CS. In this case the nonzero coefficients in the sparse reconstruction are favored to belong to a small number of groups. This technique is related to using a norm associated to the group LASSO (Tibshirani, 1996) (Efron, et al., 2004) and can be associated to multi-task CS (Ji, et al., 2009). This technique has been shown to have some benefits over standard sparsity (Eldar, et al., 2009) (Huang, et al., 2010). Group sparsity has been used in weather radar for signal separation of wind turbine clutter (Uysal, et al., 2016), incoherent fusion in multi-static ISAR under known motion models (Brisken, et al., 15), time-frequency estimation (Zhang, et al., 2015), and sensor fusion, e.g., in passive radar networks (Weiß, 2016), or tracking (Subedi, et al., 2016).

It is thus an object of the present invention to provide a method and radar system for detection and azimuth and height estimation of objects in a scene which allows a reliable estimation of the height of small objects at far distances, in particular at distances between 80 m and 150 m in front of a moving vehicle.

SUMMARY OF THE INVENTION

The object of the invention is achieved with the method and system according to claims 1 and 10.

Advantageous embodiments of the method are subject matter of the dependent claims or are described in the subsequent examples for carrying out the invention.

In the proposed method radar signals are emitted to the scene and reflected radar signals from the scene are received using at least one multi-channel radar sensor which comprises a two-dimensional array of antenna elements, i.e. transmitting and receiving elements, with spatial diversity in horizontal and vertical axes, in particular including non-uniform sparse arrays. The measurement signals of the at least one radar sensor are processed to detect objects in the scene and a height and azimuth estimation of one or several detected object(s) is performed using the techniques of sparse reconstruction and Compressed Sensing (CS).

The proposed compressive sensing method is based on a combination of

> (i) a near-field multipath observation model, which includes predictions of phases and amplitudes for hypotheses of height of the detected object(s) based on ground-reflected path contributions of the emitted and reflected radar signals, for specular reflections from a flat surface with possibly unknown reflection coefficient, for pairs of transmitting and receiving elements, and
> (ii) a group-sparse estimation model for measurement signals of mutually incoherent measurements taken at different distances from the detected object(s) or from mutually incoherent arrays of antenna elements.

The invention in particular relates to the radar estimation of the azimuth and specially the height of small objects in the presence of ground-reflected specular contributions with possibly unknown reflection coefficient to account for the fraction of the signal that is diffusely reflected or absorbed due to the unknown state of the ground. Embodiments of the present invention include sparse reconstruction methods to leverage phase and amplitude information across an array of coherent Tx and Rx elements of the at least one radar sensor, and also group-sparse models to combine measurements from incoherent such arrays, i.e. from different radar sensors or from non-coherent sets of antenna elements, or combine measurements taken at different distances to the detected target(s) of interest. For all estimation models, open-source solvers are available to find the solutions efficiently. Examples are the sparse reconstruction solver Orthogonal Matching Pursuit (OMP), in particular in the case of one sensor using step-by-step fusion as described later, and the group-sparse reconstruction solver Block Orthogonal Matching Pursuit (BOMP), in particular in the case of group-sparse fusion over distances or over sensors also described later.

PRELIMINARY NOTIONS AND NOTATION ON COMPRESSED SENSING AND GROUP SPARSITY

Formally, sparse reconstruction refers to the problem of approximating the solution to a linear system y = *Ax,* wherein the signal or measurement $y \in \mathbb{C}^M$ is expected to be a linear superposition of a few columns of the sensing matrix or dictionary $A \in \mathbb{C}^{M \times N}$. In the Compressed sensing framework this formulation comprises two steps: i) the expression of the signal in a sparsifying dictionary (Mallat, et al., 1993), *x' = Ψ x,* e.g., in a suitable transform or coding domain (e.g., Fourier or wavelet domain) where the signal $x' \in \mathbb{C}^{N'}$ can be represented with few nonzero coefficients in $x \in \mathbb{C}^N$; and ii) the sampling scheme, via a so-called Compressed Sensing/Sampling or measurement matrix, which produces the measurement *y = Φ x'.* The combination of both steps yields the matrix A = Φ Ψ. Pre-multiplication by Φ can be regarded in multiple ways: as a linear combination of signals into channels to be processed, or even as a preconditioner after measurement acquisition. In either case, the resulting system is normally underdetermined, and a sparsity-promoting constraint or penalty on the solution is necessary as part of the model (e.g., to avoid overfitting), typically in terms of the one-norm, $\|x\|_1 < \tau$ (defined in Table 2), for a suitably selected $\tau$ that depends on the sparsity level, and also on the noise level in the approximation $\|y - Ax\|_2$. The nonzero entries of $x \in \mathbb{C}^K$ correspond to the coefficients of the sparse reconstruction of the signal after appropriate thresholding. The thresholding procedure can be associated to a detection step and can be standardized by normalizing the signal y and the sensing matrix A column-wise. The selected threshold usually depends on the desired sparsity (which is a modeling choice depending on the maximum number of detections expected), noise level, and the properties of the model itself, and can be found with training data from simulated or real scenarios. The number of grid points N is also an important parameter that determines the accuracy and resolution: a low number produces a bigger off-grid fitting error, whereas a high number increases the so-called coherency of the sensing matrix defined as the maximum cosine similarity between columns, related with theoretical sufficient but not necessary conditions for sparse reconstruction that in practice are not necessary for satisfactory performance. Efficient optimization approaches to address the above sparse reconstruction problem include, among others, Basis Pursuit De-noise (BPDN) (Chen, et al., 1998) (Berg, et al., 2008), Focal Underdetermined System Solver (FOCUSS) (Gorodnitsky, et al., 1997) (Cotter, et al., 2005) and also greedy faster approaches like Orthogonal Matching Pursuit (OMP) (Pati, et al., 1993). Approaches for the design of the CS matrix can be found, e.g., in (Yu, et al., 2011), (Duarte, et al., 2011) and (Ibrahim, et al., 2015).

Group-sparsity models are a generalization of the above formulation that consider a similar system *y = Ax* but make a partition of the columns in the sensing matrix *A* and associated entries of *x* among groups $G := \{g_1,..., g_{\#group}\}$,

and apply a penalty or constraint in terms of a group- or blocknorm of the form

$$\left\| x \right\|_{G,1} := \sum_{l=1}^{\#\text{groups}} \left\| x_{k\in g_l} \right\|_2,$$

where $x_{k\in g}$ represents the entries of x in group g. Minimizing or constraining such norm induces a few number of groups to have nonzero entries. Group-sparse reconstruction strategies include extensions of BPDN (Berg, et al., 2007), and greedy and fast approaches like Block Orthogonal Matching Pursuit (BOMP) (Eldar, et al., 2010) and Block Nearly Orthogonal Matching Pursuit (Block NOMP) (Blumensath, et al., 2008), among others. Similarly to the case of standard sparse reconstruction, if the partition among groups is defined among the columns of the sparsifying dictionary $\Psi$ and associated entries of x in the mapping x' = $\Psi$ x, then the Compressed Sampling or Sensing mapping y = $\Phi$ x' automatically preserves this group structure, i.e., the group partition of columns of A = $\Phi$ $\Psi$ and $\Psi$ are the same.

The proposed method uses array measurements of phase and amplitude from arrays with sufficient spatial diversity both along the horizontal and vertical axes, to discriminate between azimuth and height hypotheses. The estimation of azimuth and height are connected in the CS framework, and high accuracy and resolution in azimuth leads to more reliable height estimation because the signal is decomposed into azimuth components. Both estimation dimensions benefit from the advantages of the CS framework, in particular allowing the use of sparse arrays, which can have a bigger aperture than uniform arrays for the same number of antenna elements, and also the availability of fast algorithms for sparse reconstruction. For height estimation, the near-field non-diffusely reflected multi-path contributions that can be present in the signal for a flat surface are explicitly used in the model with regards to the following aspects: i) implicitly coupling the angles of the direct and indirect paths (DoAs), which increases accuracy and resolution; ii) incorporating propagation phase delays, which are different for the direct-direct and reflected-direct paths even though they have the same DoA, and are also different for the reflected-direct and reflected-reflected paths for the specular DoA; and iii) using the information of amplitude due to the multipath constructive or destructive interference across widely separated antennas in the sparse array or across multiple incoherent arrays. With the proposed method improved estimation results for azimuth and height of detected objects are achieved which allow to estimate the height of small objects at the above far distances. The combination of the near-field multi-path observation model for coherent arrays with the group-sparse estimation model for multiple mutually incoherent array measurements provides high reliability and accuracy of the height estimation. The proposed method also provides a higher robustness to model uncertainties in realistic road conditions and can thus provide a more reliable height estimation not only of small objects at far distances but also of bigger objects at close distances.

The embodiment of azimuth and height estimation using multiple incoherent arrays has advantages besides the diversity of aspect angles. There is more information in the phase of the signal sampled across antennas in separated sensors because of the diversity of paths from Tx to target to Rx, which translates into lower false alarms due to a mutual compensation of sidelobe ambiguity both arising from noise or from clutter. As a consequence, the proposed method for incoherent measurement fusion allows a satisfactory performance using a combination of multiple incoherent radar sensors possibly at a lower cost and with more flexible design constraints. Additional information is also contained in the amplitude of the signal across antennas because the pattern of constructive-destructive interference varies with the height of the sensor. This has two effects depending on the embodiment: i) a direct relationship between the unknown height of the scatterer and the amplitudes of the observed multipath signal at different sensor heights, where the multipath model is put to the advantage of height estimation, and ii) the fact that two sensors at different heights can avoid being at the same time in a region of multipath destructive interference (where SNR is lower). Some of these effects hold for the complementary or preliminary problem of azimuth estimation with incoherent array sensors, because the latter can be located at widely separated positions on the left and right parts of the vehicle. Our methods also enable these array sensors to be located with different orientations to cover a wider field of view or use conformal antennas.

In the embodiments for combination of measurements along the trajectory of the vehicle using our group-sparsity models, similar advantages hold as for multiple sensors. There is more combined information in the phase and amplitude of the signal at different distances because part of the stochastic noise is independent and because the pattern of constructive-destructive interference varies with the distance, i.e., as mentioned above, i) the group sparsity constraint induces a mutual compensation of sidelobe ambiguities due to noise, and ii) along the trajectory multi-path destructive interference (where SNR is lower) can be ameliorated because it is likely that some measurements will be taken also from a point of constructive interference (where SNR is higher). The previous advantages of incoherent combination of measurements both from multiple sensors or along the trajectory, hold in addition to other benefits such as diversity of aspect angles and radar cross sections, and avoidance of ghost-targets, e.g., due to specular reflections in the guard-rail.

An advantageous embodiment considers the reflection coefficient for the specular reflections to be unknown to account for the fraction of the energy that is absorbed or diffusely reflected due to the roughness of the ground. We consider three embodiments: In the first, the multi-path signal is decomposed as the superposition of independent path contributions. In this case, the sparse reconstruction coefficients allow the necessary degrees of freedom to account for the amplitude and phase of each path contribution, particularly due to the unknown attenuation but also due to the phase shift produced by the interaction of the wave with the ground. In the second, we consider a grid of hypotheses of reflection coefficient and a pooling procedure that allows to extract the height hypothesis that is most likely to represent the signal. In the third, we use dictionary learning to find the set of observation models that reduce the fitting error. These embodiments are extensions that increase the robustness to model uncertainties of the proposed height estimation methods.

The proposed method and radar system are in particular applicable in automotive applications for detecting and locating objects, and may for example be applied in systems configured to execute control schemes associated with adaptive cruise control, collision avoidance, pre-crash preparation, and also sideobject detection.

BRIEF DESCRIPTION OF THE DRAWINGS

The proposed method is described in detail in the following by way of examples in connection with the drawings, wherein:

Fig. 1 depicts a block diagram with a generic processing chain to obtain range-Doppler bins of detected objects.

Fig. 2 depicts an obstacle in a road and the direct and ground-reflected paths from a given Tx to a target, and back to a given Rx, illustrating the reasoning for the modelling of hypotheses used for sparse reconstruction.

Fig. 3 depicts a sparse array with spatial diversity along the axes parallel and perpendicular to a road.

Fig. 4 depicts the trajectory of a car approaching an obstacle to illustrate measurement acquisition along the trajectory. Fig. 4A shows a plant view of the road and a coordinate frame associated to the ego-vehicle to illustrate that the apparent azimuth of a potential obstacle changes along the trajectory. Fig. 4B shows a transversal view of the same scenario in the case of a flat road.

Fig. 5 depicts a flow chart for group-sparse azimuth and height estimation with a moving window over filtering intervals along the trajectory of the vehicle.

Fig. 6 depicts some possible locations of multiple incoherent radar array sensors in a vehicle, in the bumper, on the sides, and on top of the windscreen.

Fig. 7 depicts a road scenario where three objects are at the same distance from the ego-vehicle and thus in the same range bin. Moreover, two of the objects, a static obstacle in front of the ego-vehicle, and another car travelling in the opposite direction, are in the same Doppler bin.

Fig. 8 depicts an example of field of views in azimuth and elevation for the configuration of arrays in Fig. 6. Fig. 8A shows the plant view and Fig. 8B the lateral view of the vehicle.

Fig. 9 illustrates the azimuth coordinate transformation between the coordinate frames of two arrays with different azimuth orientations. Fig. 9A shows that in the near field this transformation depends on the distance to the detection of interest. It also illustrates that a potential detection may be in the field of view of one sensor but not in the field of view of the other sensor. Fig. 9B illustrates the angles involved to compute the transformation of coordinates using the law of sines.

DETAILED DESCRIPTION OF THE INVENTION

In the following, first we describe the Physics principles and assumptions underlying the observation models used to interpret the measured input data, and then we describe exemplary embodiments of measurement acquisition and signal processing means, including the formulation of azimuth and height estimation procedures. The first two embodiments are not part of the present invention. Only portions of these embodiments are used in the proposed method. Point-shaped objects are assumed in diagrams and model formulations. Table 2 collects the notation used in the description.

Measurements are obtained with a multi-channel radar, including either Single-Input Multiple-Output (SIMO) or Multiple-Input Multiple-Output (MIMO) radar multiplexing schemes such as Time Division Multiplexing, Code Division Multiplexing or Frequency Division Multiplexing with suitable waveforms. This allows to associate radar readings of receiving elements (Rx elements) to the transmission of each transmitting element (Tx element) of the radar sensor.

The waveform modulation includes e.g., Frequency Modulated Continuous Waveforms (FMCW).

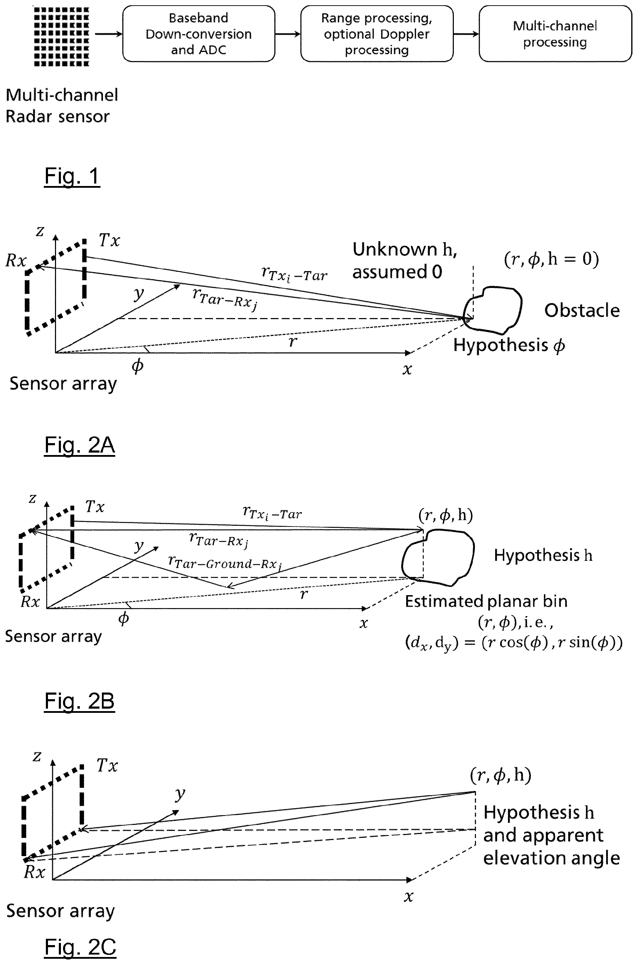

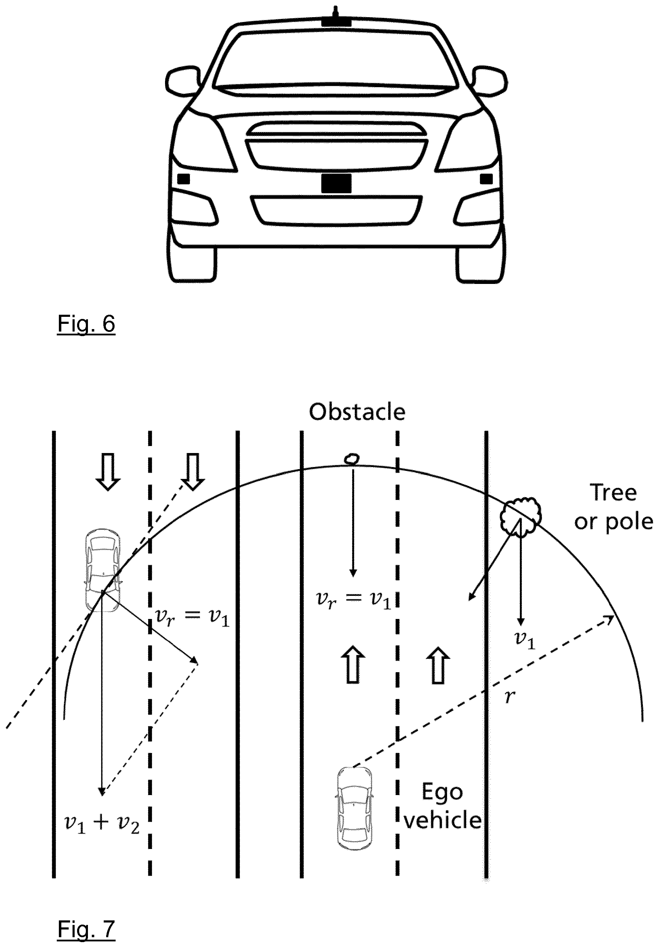

In the following it is assumed that the range or range-Doppler bins of relevant detections are given (cf. Fig. 1). The considered ground-reflected multi-path contributions have a negligible influence on the estimation of range and Doppler for the case of small objects at far distances because the different contributions cannot be separated in the range or Doppler domains, and they appear as a single detection. This argument may not apply to high objects like bridges, especially when they are at close distances because the delays of multiple paths may appear in different range bins. The latter case can be addressed in multiple ways, e.g., extending the present Compressed Sensing models to include the range and Doppler dimensions, or using recent techniques for height estimation referenced above. In principle, Doppler estimation is optional but is desirable because it provides an additional dimension for target separation and in some cases it brings an increase of SNR, e.g., when using a train of linearly modulated chirps. Figure 1 shows a block diagram with a general processing chain to obtain range or range-Doppler bins of detected objects. The range-Doppler processing can include known techniques like range compression, Doppler filtering, clutter suppression, and CFAR detection. For example, for the estimation of the height of static objects in the road, the Doppler bin of interest, if previously estimated, can be selected according to the velocity of the vehicle. For a static object exactly in front of the vehicle, the radial velocity is given by the velocity of the vehicle, and this is assumed approximately known, but more generally other Doppler bins can be considered for each range bin inside a relevant field of view (FoV) in azimuth by calculating the radial velocity expected from static objects at those distances and angular values (cf. Fig. 7).

In what follows, if Doppler processing is performed previously to the angular estimation, then we assume when necessary that the Doppler frequency of the relevant Doppler bin is compensated for each pair of Tx and Rx elements and therefore assumed zero. For TDM MIMO, this compensation may be required to ensure that the phase contributions are due to angles only. In what follows, we assume that the input data corresponds to a range-Doppler bin although in principle only a range estimate is required.

## OBSERVATION MODELS FOR AZIMUTH AND HEIGHT ESTIMATION

The aim of this invention is azimuth and height estimation of narrow-band sources at relevant range-Doppler bins. Consider a range bin of a relevant detection and the corresponding spectral value, e.g., in frequency domain, associated to the transmitted and received signal by a pair of Tx and Rx elements. We model the resulting complex values, for each combination of Tx and Rx element (usually called virtual pair), as a sum of multiple path contributions, each which a phase produced by the propagation delay along the corresponding path. The first model we consider is the near-field model for a direct-direct (DD) path, in which the wave hits the target without ground reflection and is reflected back to the receiver again without ground reflection. Formally, the DD near-field steering vector associated to candidate hypotheses of azimuth $\Phi$ and height h for a coherent array with M transmitters and M' receivers, is defined as follows:

$$v_d^{DD}(h) := \begin{bmatrix} e^{\frac{i2\pi}{\lambda} r_{\text{Tx}_1 - \text{Tar} - \text{Rx}_1}(h)} \\ \vdots \\ e^{\frac{i2\pi}{\lambda} r_{\text{Tx}_M - \text{Tar} - \text{Rx}_{M'}}(h)} \end{bmatrix} \in \mathbb{C}^{MM' \times 1},$$

where d = (r, $\Phi$) denotes the planar position, e.g., in Cylindrical coordinates, of a target located at range r and azimuth $\Phi$. The quantity $r_{\text{Txi-Tar-Rxj}}(h)$ is the distance traveled by the wave, with wavelength $\lambda$, from transmitter Txi to a target located at cylindrical coordinates (r, $\Phi$, h) and back to receiver Rxj without ground reflections (see Fig. 2). This distance is computed with known trigonometric relations.

Fig. 2 depicts an obstacle, representing the object in a road, and the geometry of the direct and ground-reflected paths from a given Tx to a scatterer and back to a given Rx. The geometry of the paths from Tx, Rx elements to the range bin r for each hypothesis of azimuth $\Phi$ is shown in Fig. 2A. For azimuth estimation, the unknown height is assumed 0, i.e., the hypothetical target is assumed located at (r, $\Phi$, h = 0). Each hypothesis in this case uses the observation model for the direct path. The geometry of the paths from Tx, Rx elements to the range-azimuth bin (r, $\Phi$) for each hypothesis of height is shown in Fig. 2B. For height estimation, we consider hypotheses of height at the previously estimated $\Phi$, i.e., we consider hypotheses of height h for a target located at (r, $\Phi$, h). In this case, each hypothesis uses the multipath observation model that results from a superposition of the direct path and the ground reflected paths. Fig. 2C illustrates the assumption that the phase contribution due to the unknown height is approximately the same across a horizontal array. This implies that the phase differences between pairs of horizontally aligned antennas are due to the apparent azimuth. In the far-field, this reduces to the assumption that the apparent azimuth angle is the same for a set of antennas horizontally aligned.

The above near-field steering vector corresponds to the phase rotation along the selected path from Tx to Rx, without any amplitude or attenuation information. We use an analogous definition for the ground-reflected paths, wherein only the phase rotation due to the length of the path is included. The attenuation and phase shift due to the interaction with the ground are modelled independently and are included in the following definition. In general, there can be contributions to the input signal for angular estimation from multiple paths that fall inside the same range or range-Doppler bin. Under the same assumptions as for the near-field steering vector, the multi-path steering vector is defined as follows

$$v_d^{4\text{paths}}(h) := v_d^{DD}(h) + \rho v_d^{DR}(h) + \rho v_d^{RD}(h) + \rho^2 v_d^{RR}(h), \qquad (1)$$

where p is the complex-coefficient that models the attenuation and phase shift due to the interaction between the wave and a flat surface for small incident angles as measured from the ground. The multiple contributions are given by the near-field steering vector replacing the distance of the direct path $r_{\text{Txi-Tar-Rxj}}$ ($h$) by the following distances (cf. Fig. 2): the distance of Tx-target-ground-Rx, $r_{\text{Txi-Tar-Ground-Rxj}}$ ($h$), referred to as direct-reflected (DR) path; the distance of Tx-ground-target-Rx, $r_{\text{Txi-Ground-Tar-Rxj}}$ ($h$), referred to as reflected-direct (RD) path; and the distance of Tx-ground-target-ground-Rx, $r_{\text{Txi-Ground-Tar-Ground-Rxj}}$ ($h$), referred to as reflected-reflected (RR) path. Typical values of the reflection coefficient p can be found for vertical and horizontal polarizations in (Knott, 1993). In a preferred embodiment (see embodiment 5), the model in equation (1) is replaced by a more general model that results from arbitrary super-position of the individual paths to account for the unknown fraction of the energy that is absorbed or diffusely reflected. In what follows, we use the notation $v_d(h)$ to denote the multipath steering vector for a given coherent array, for a target located at plane Cylindrical coordinates d = (r, $\phi$) or, equivalently, at Cartesian coordinates, d = (x, y) = (r cos($\phi$) , r sin($\phi$)), with height h.

We make the following additional observations about the observation model: Our models are agnostic to the initial phase, defined as the phase delay due to the propagation time across each path. In other words, our technique relies on phase differences across pairs of Tx and Rx elements for the multipath signal. As a consequence, the overall multipath steering vector for a coherent array can be scaled by an arbitrary imaginary exponential without affecting the model. The phase differences between individual paths are naturally not measured directly but are modeled in the construction of multipath hypotheses in (1) to interpret the multipath signal. On the other hand, the power loss due to the two-way freespace propagation is relevant only if the target is close enough that the distance to each antenna is considerably different, and in this case it can be accounted for as a multiplicative factor in terms of the detected range-bin for each pair of Tx and Rx elements. Otherwise, this correction is irrelevant for our CS models because, as explained in the preliminaries above, the sensing matrices are normalized column-wise. Note also that a far-field model can be considered as well. A key difference between the near-field and the near-field multi-path steering vectors is that the latter contains information about the amplitude due to the interference between the path contributions. This model is robust to range errors at the regime of far targets considered, but is sensitive to the reflection coefficient p. Depending on the embodiment, the reflection coefficient p is assumed known or unknown. The model of four paths assumes a single reflection point with the ground, which results from the assumption of a perfectly specular reflection from the ground surface. In embodiment 5, the relaxation on the knowledge of p, particularly the attenuation at the reflection, increases the applicability of this model to account for the unknown fraction of the energy that is absorbed or diffusely reflected due to the roughness of the ground.

Next we use the multi-path steering vector to define sparse reconstruction models for azimuth and height estimation. We describe next two preferred methods: 1) sequential estimation of azimuth, for unknown height, followed by height estimation for the estimated azimuth bins; and 2) joint estimation of azimuth and height.

EMBODIMENT 1: SPARSE RECONSTRUCTION FOR SEQUENTIAL ESTIMATION OF AZIMUTH AND HEIGHT

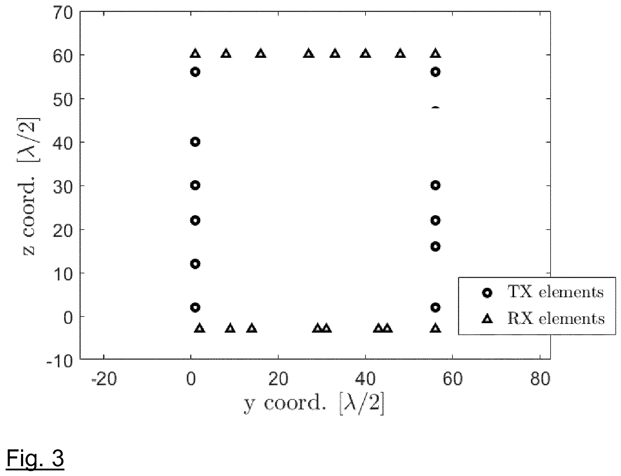

In this embodiment, the estimation of azimuth and height are performed sequentially in two stages. In the first stage, azimuth is estimated using a set of horizontally aligned coherent transmitters and receivers (see Fig. 3). Fig. 3 shows the Tx and Rx elements of an exemplary sparse array sensor with spatial diversity along the axes parallel and perpendicular to the ground. For a set of horizontally aligned Tx elements, and horizontally aligned Rx elements, it is approximately guaranteed that the difference in phase for each of the four paths is only due to the horizontal displacement (or azimuth) of candidate targets.

For the above measurement acquisition, the vector of data points y (measurement signals) contains the complex spectral values for a relevant range-Doppler frequency bin associated to the aforementioned set of transmitters and receivers. For estimation of azimuth, we assume the value of the unknown height is h = 0 (see Fig. 2), but other alternative assumptions can be made. The formulation of the sparse reconstruction is as follows: The columns of the sensing matrix A, for the system y = Ax, are constructed evaluating the multi-path steering vector (1) at hypotheses of $\Phi$ in a grid of values {$\phi_1$, ..., $\phi_K$} for the relevant FoV [$\phi_{min}$, $\phi_{max}$]. That is, the sparse reconstruction problem is given by

$$y \approx \begin{bmatrix} | & | & & | \\ v_{\Phi_1}(0) & v_{\Phi_2}(0) & \cdots & v_{\Phi_K}(0) \\ | & | & & | \end{bmatrix} \begin{bmatrix} x_1 \\ x_2 \\ \vdots \\ x_K \end{bmatrix},$$

subject to a sparsity-promoting constraint or penalty, e.g., in terms of the 1-norm $\|x\|_1 := \sum_{k=1}^K |x_k|$.

As described in the preliminaries, an approximation to the above sparse reconstruction problem can be obtained with standard sparse reconstruction methods, including OMP, FOCUSS, BPDN, etc.

The azimuth of the detected targets are obtained thresholding the absolute values of the reconstruction coefficients

$$s^{\text{Azimuth}} := |[x_1, \cdots, x_K]| \qquad (2)$$

where the absolute value is computed entry-wise. The selected entries correspond to the estimated azimuth bins.

The sparse reconstruction solution, or coefficient vector x, is a vector of complex entries such that the entries with sufficiently large absolute value (according to the thresholding) multiply the multi-path steering vectors of the hypotheses that best reconstruct the signal. These coefficients are degrees of freedom that represent multiple aspects that have been factored out of the multi-path steering vector model and that we are not directly interested in, including the attenuation due to the two-way propagation loss, RCS of the target, etc. The unknown height, which is assumed zero for azimuth estimation, has also a contribution to the phase that is accounted for as a common factor in these coefficients because it is approximately the same for all elements horizontally aligned (see Fig. 2C).

In the scenario of a static target approximately in front of the vehicle, a parametrization of the sparse reconstruction system may be desirable in terms of Cartesian coordinates for the transversal displacement $\{y_1, \ldots, y_n\}$ (see Fig. 2) in a field of view of interest given by $[r\sin(\phi_{\min}), r\sin(\phi_{\max})]$. In this case, the corresponding x coordinate is given by $x_i = r^2 - y_i^2$ in terms of the known range bin.

Once the azimuth bins $\{\phi_1, \ldots, \phi_n\}$ or transversal coordinates $\{y_1, \ldots, y_n\}$ of candidate targets are estimated, the second stage is the estimation of the height of scatterers at each bin. The vector of data points y used for this estimation task corresponds to the complex spectral values for the relevant range-Doppler bin associated to the full set of transmitters and receivers available (see Fig. 3). That is, whereas for azimuth estimation we assumed a measurement acquisition from horizontally aligned Tx and Rx, for this task is necessary spatial diversity both in the vertical coordinate (to distinguish hypotheses of height) and in the horizontal axis (to discriminate between the hypotheses of height for targets located at different azimuth values).

Consider first, for simplicity of exposition, the case of a single azimuth bin, and below we describe the general case. For its estimated planar location d = (r, Φ) in Cylindrical coordinates, or $d = (x,y) = (r\sin(\phi), r\cos(\phi))$ in Cartesian coordinates, the columns of the sensing matrix A, for the system y = Ax, are constructed evaluating the above multi-path steering vector, at hypotheses of h in a grid of values for the relevant FoV in elevation (see Fig. 2), and we obtain the following system for sparse reconstruction,

$$y \approx \begin{bmatrix} | & | & & | \\ v_d(h_1) & v_d(h_2) & \cdots & v_d(h_K) \\ | & | & & | \end{bmatrix} \begin{bmatrix} x_1 \\ x_2 \\ \vdots \\ x_K \end{bmatrix},$$

subject again to a sparsity-promoting constraint or penalty, e.g., in terms of the 1-norm $\|x\|_1$. The height of the detected targets in the only azimuth bin are obtained thresholding the absolute values of the reconstruction coefficients,

$$s^{\text{Height}} := |[x_1, \cdots, x_K]|.$$

In the case of several estimated azimuth bins, e.g., two bins, $\{\phi_1, \phi_2\}$, the columns of the sensing matrix A are constructed similarly but concatenating as columns the hypotheses of height for each estimated azimuth, and the sparse reconstruction system is as follows:

$$y \approx \left[\left[\begin{matrix} | & | & & | \\ v_{\phi_1}(h_1) & v_{\phi_1}(h_2) & \cdots & v_{\phi_1}(h_K) \\ | & | & & | \end{matrix}\right] \left[\begin{matrix} | & | & & | \\ v_{\phi_2}(h_1) & v_{\phi_2}(h_2) & \cdots & v_{\phi_2}(h_K) \\ | & | & & | \end{matrix}\right]\right] \begin{bmatrix} x_1 \\ x_2 \\ \vdots \\ x_K \\ x_{K+1} \\ x_{K+2} \\ \vdots \\ x_{2K} \end{bmatrix}$$

subject to a sparsity-promoting constraint or penalty, e.g., in terms of the 1-norm $\|x\|_1$. Note that here the sparsity constraint penalizes all the entries individually and in the same way, because for each azimuth bin there may be a different number of targets and the candidate target(s) may have different height(s).

The desired height detections are computed by thresholding the absolute values of the reconstruction coefficients

$$s^{\text{Height},\{\phi_1,\phi_2\}} := |[x_1, \cdots, x_K, x_{K+1}, \cdots, x_{2K}]|. \qquad (3)$$

The selected entries in the first block correspond to the detected height bins (possibly more than one) associated to the first azimuth bin, and the selected entries in the second block, to the detected height bins for the second azimuth bin.

EMBODIMENT 2: SPARSE RECONSTRUCTION MODEL FOR JOINT AZIMUTH AND HEIGHT ESTIMATION

A further embodiment considers an alternative to sequential estimation of azimuth and height, namely, it uses sparse reconstruction to estimate jointly the azimuth and the height. This method requires measurements from Tx and Rx elements with spatial diversity both in the vertical and horizontal axes (to discriminate between combinations of hypotheses of azimuth and height). The data points y (measurement signals) correspond to the complex spectral values for a relevant range-Doppler frequency bin associated to the aforementioned full set of transmitters and receivers available.

The sensing matrix is constructed concatenating as columns the evaluation of the multi-path steering vector (1), for a given range bin r, at the combinations of hypotheses of azimuth $\Phi$ and height $h$ in a grid of values, $\{\phi_1, ..., \phi_{K_\phi}\}$, $\{h_1, ..., h_{K_h}\}$, on both FoVs. The sparse reconstruction system takes a similar form as for height estimation. Two important differences are that the number of rows in the sensing matrix corresponds to the full set of transmitters and receivers, and the columns include all potential combinations of unknown height and azimuth values in the respective grids,

$$y \approx \left[\begin{matrix} | & | & & | & & | & | & & | \\ v_{\phi_1}(h_1) & v_{\phi_1}(h_2) & \cdots & v_{\phi_1}(h_{K_h}) & \cdots & v_{\phi_{K_\phi}}(h_1) & v_{\phi_{K_\phi}}(h_2) & \cdots & v_{\phi_{K_\phi}}(h_{K_h}) \\ | & | & & | & & | & | & & | \end{matrix}\right] \begin{bmatrix} x_1 \\ \vdots \\ x_{K_h} \\ \vdots \\ x_{K_\phi(K_h-1)+1} \\ \vdots \\ x_{K_\phi K_h} \end{bmatrix}$$

subject to a sparsity-promoting constraint or penalty, e.g., in terms of the 1-norm $\|x\|_1$. As in the case of sequential estimation of height in terms of azimuth bins, the sparsity constraint penalizes all the entries individually and in the same way, because for each azimuth bin there may be a different number of targets and the candidate target(s) may have different height(s).

The desired azimuth and height detections are computed by thresholding the absolute values of the reconstruction coefficients

$$s^{\text{Joint}} := |[x_1, \cdots, x_{K_h}, \cdots, x_{K_\phi(K_h-1)+1}, \cdots, x_{K_\phi K_h}]|. \qquad (4)$$

Up until this point, the problem of azimuth and height estimation has been described for the near-field multi-path model at a given distance from the target using a single coherent array. Next we describe embodiments of the present invention where sparse reconstructions at different points along the trajectory are combined, in one alternative using a simple average, and in another using a group-sparsity model.

## MOTIVATION FOR COMBINING MEASUREMENTS ACROSS MULTIPLE DISTANCES TO TARGET

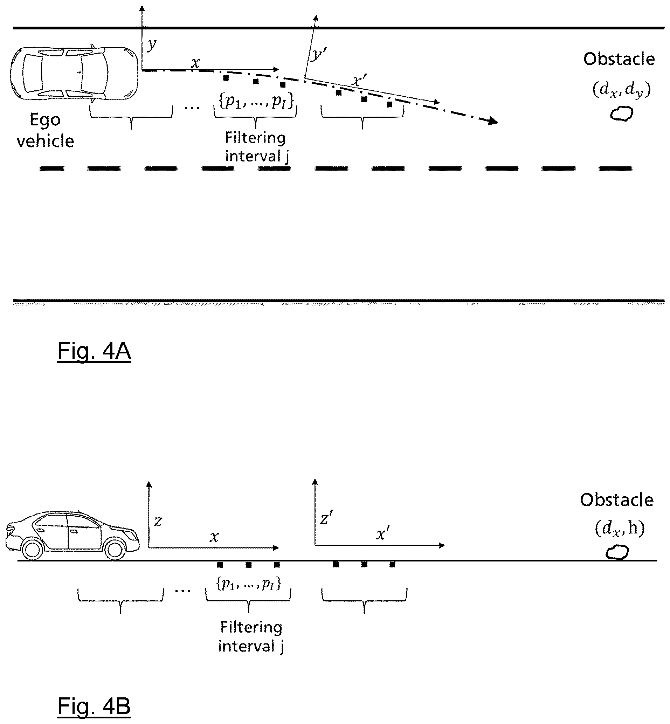

Previous embodiments have addressed azimuth and height estimation using a coherent array measurement from a given distance to the target. These estimates can be improved combining measurements along the trajectory under certain conditions, especially for far objects. This is important for robustness (increased detection and reduced false alarms), for example with regards to ghost targets from specular reflections in guard-rails, or changes in road condition, and also increases angular accuracy and resolution. In the case of azimuth estimation, we describe this kind of processing only over small intervals where the changes of azimuth or transversal coordinate of the target are negligible for approximately straight trajectories at far distances to the target (see Fig. 4A). Fortunately, for a flat road, the height coordinate remains constant over longer portion of the trajectory (see Fig. 4B) and sparse reconstruction models can be constructed with hypotheses in terms of previously estimated and possibly varying range-azimuth bins that correspond to the same potential obstacle.

In the next three sections we describe embodiments where sparse reconstruction is used for incoherent combination of measurements across multiple distances to the target of interest.

## EMBODIMENT 3.A: INCOHERENT RANGE- FUSION VIA AVERAGING

Suppose that the above sparse reconstruction system of embodiments 1 and 2, comprised each of data points y and sensing matrix A, has been formulated at several points along the trajectory to the target $\{p_1, ..., p_I\}$ (cf. Fig. 4),

$$\{y^{(i)} = A^{(i)}x^{(i)}\} \tag{5}$$

for i = 1, ... , I, where the data $y^{(i)}$ correspond to the same range-Doppler detection.

We refer to the points $\{p_1, ..., p_I\}$ as interval of the trajectory or filtering interval. One approach to improve individual estimates of azimuth and height or both according to the present invention is to consider the average over distances, under suitable conditions detailed next, of the sparse reconstruction solutions,

$$s_{\text{step-by-step}} := \sum_{i=1}^{I} s^{(i)} = \frac{1}{I} \sum_{i=1}^{I} |x^{(i)}| \tag{6}$$

where $s^{(i)}$ is the azimuth or height map at step i as in (2) (3) or (4). The absolute value is taken to avoid cancellations. The solution to the estimation problem is then given by the hypotheses obtained by thresholding $s_{\text{step-by-step}}$. This approach naturally requires that the entries of $x^{(i)}$ correspond to the same hypotheses (of azimuth or height or both) for all points along the trajectory, i = 1, ... , I, or equivalently, the columns of $A^{(i)}$ represent the same hypotheses for the same detection. We refer to these conditions as data and hypotheses consistency over the filtering interval and is defined in the next section.

Note that $s_{\text{step-by-step}}$ can be used in the estimation of azimuth and in the estimation of height as described in embodiment 1, and for the joint estimation of azimuth and height as described in embodiment 2, where in each case the sparse reconstruction systems $\{y^{(i)} = A^{(i)} x^{(i)}\}$ are defined correspondingly. We refer to this approach as step-by-step model for range fusion.

## DATA AND HYPOTHESIS CONSISTENCY FOR FILTERING ALONG THE TRAJECTORY

The assumption of data consistency says that $y^{(i)}$ corresponds to the range-Doppler bin of the same target of interest for all $i = 1, ... , I$. That is, we assume that the range-Doppler bin may have changed along the trajectory, and those values are tracked or identified with one another. For the case of static objects approximately in front of the vehicle this task is facilitated using knowledge of the platform velocity and the Doppler measurements.

The assumption of hypothesis consistency, for azimuth or height estimation, means that the entries of the sparse reconstruction $x^{(i)}$ and the associated columns of the sensing matrices $A^{(i)}$ correspond to the same hypotheses formulated for the same detection(s). Next we write these conditions formally.

- Hypothesis consistency along the trajectory for azimuth estimation:

1. The range-Doppler bin (note that we only consider one range or range-Doppler bin for azimuth estimation), for which the hypotheses of azimuth are formulated at different points along the trajectory, correspond to the same detected target, or detection (in concordance with the aforementioned data consistency).
2. The columns of the sensing matrix correspond to the same hypotheses of azimuth.

- Hypothesis consistency along the trajectory for height estimation:

1. The previously estimated azimuth bins, possibly varying, (for a single range-Doppler bin) for which hypotheses of height are formulated at different points along the trajectory, correspond to the same detected targets.
2. The columns of the sensing matrix correspond to the same hypotheses of height.

For the case of joint estimation of azimuth and height the conditions are analogous to the conditions for azimuth estimation.

Condition 1 for azimuth estimation can be readily satisfied with appropriate construction of the sensing matrices if the condition of data consistency holds. In the case of height estimation, condition 1 can be satisfied similarly assuming that the same azimuth bins are present in the signals $y^{(i)}$ along a sufficiently short filtering interval. Note that in the proposed CS framework of embodiment 1, the reconstruction of the signal over height hypotheses is performed over previously estimated azimuth bins that can change over time. If the road is flat, this does not affect condition 2 as we explain next.

Condition 2 can be satisfied, for azimuth or height estimation, if the coordinates of azimuth and/or height in the frame of reference that moves with the vehicle have not changed (see Fig. 4). In Figure 4A we observe that the azimuth or transversal Cartesian coordinate can change along the trajectory of the vehicle. It also suggests that Cartesian coordinates are desirable if the trajectory is approximately straight. (An alternative in this case is including a correction in the hypotheses of the sensing matrix, e.g., if the motion of the vehicle is known thanks to odometry systems.) In Figure 4B we observe that for a flat road, the height of the object (not the apparent elevation angle) remains constant regardless of the trajectory. That is, for a flat road, condition 2 is satisfied for height estimation for each of the blocks in the sensing matrix corresponding to each previously estimated azimuth bin.

Next we present an alternative embodiment to step-by-step range fusion, followed by a method to deal with short filtering intervals.

EMBODIMENT 3.B: INCOHERENT GROUP- SPARSITY RANGE-FUSION

This embodiment considers a sparse reconstruction model and method that combines the input data and the observation models $\{y^{(i)}, A^{(i)}\}$, i=1,...,I, at several points $\{p_1, ..., p_I\}$ along the trajectory. This method approximates the solution to $\tilde{y} = \tilde{A}\,\tilde{x}$, with $\tilde{y} := [y^{(1)}; ...; y^{(I)}]$ containing the array measurements at each point stacked column-wise, and $\tilde{A} := \text{blkdiag}(A^{(1)}, ..., A^{(I)})$ (which comprises the same set of linear systems as in embodiment 3A because of the block-diagonal structure) but subject to a group-sparsity constraint or penalty that couples the solutions of the individual systems, using a penalty or constraint in terms of the group-sparsity norm $\|\tilde{x}\|_{G,1}$ defined by (see preliminaries),

$$\left\|\tilde{x}\right\|_{G,1} := \sqrt{|\tilde{x}_1|^2 + \left|\tilde{x}_{K+1}\right|^2 + \cdots + |\tilde{x}_{(I-1)K+1}|} + \sqrt{|\tilde{x}_2|^2 + \left|\tilde{x}_{K+2}\right|^2 + \cdots + |\tilde{x}_{(I-1)K+2}|}$$

$$+ \cdots + \sqrt{|\tilde{x}_K|^2 + \left|\tilde{x}_{2K}\right|^2 + \cdots + |\tilde{x}_{IK}|}$$

where we recall that K is the total number of hypotheses of azimuth, height or both. This constraint induces a penalty on the number of groups of entries in x that are nonzero, where a group of entries with indexes in the set $g_k = \{k, K + k, ... , (I - 1)K + k\}$, for $k = 1, ..., K$, corresponds to the same hypothesis of azimuth or height or a combination of both at each distance to the target. That is, the partition of entries among groups is given by the following labels $1_I \otimes (1, 2, ..., K)$, i.e., the indexes of the hypotheses considered, repeated for the $I$ points along the trajectory of the vehicle.

The solution to the estimation problem is then given by the hypotheses obtained by thresholding the quantity

$$s_{\text{group-sparsity}} := \frac{1}{I} \sum_{i=1}^{I} |\tilde{x}^{(i)}|$$

where

$$\tilde{x}^{(i)} := [\tilde{x}_{(i-1)K+1}, \ldots, \tilde{x}_{iK}]$$

is the ith block of entries of $\tilde{x}$.

The average computed for $s_{\text{group-sparsity}}$ is analogous to the average computed for $s_{\text{step-by-step}}$ in (6) over the absolute values of the individual solutions $x^{(i)}$. The difference is that here the solution blocks $\tilde{x}^{(i)}$ are computed subject to a constraint or penalty that couples them, i.e., in general the methods produce different reconstructions, $\tilde{x}^{(i)} \neq x^{(i)}$. Naturally, the same assumption of data and hypotheses consistency defined above is required, in this case for two reasons, because of the noted average, and because the group-sparsity coupling defines groups based on predictions for the same hypotheses, which is a stronger form of combining information.

For the sake of clarity, we provide next a symbolic expansion of the system $\tilde{y} = \tilde{A}\tilde{x}$ for the case of height estimation for a single azimuth bin, assumed previously estimated, for two array measurements (I = 2) at distance values $\{r_1, r_2\}$,

$$\begin{bmatrix} | \\ y^{d_1} \\ | \\ | \\ y^{d_2} \\ | \end{bmatrix} \approx \begin{bmatrix} \begin{bmatrix} | & | & | \\ v_{d_1}(h_1) v_{d_1}(h_2) \cdots v_{d_1}(h_K) \\ | & | & | \end{bmatrix} & 0_{MM' \times K} \\ 0_{MM' \times K} & \begin{bmatrix} | & | & | \\ v_{d_2}(h_1) v_{d_2}(h_2) \cdots v_{d_2}(h_K) \\ | & | & | \end{bmatrix} \end{bmatrix} \begin{bmatrix} x_1 \\ x_2 \\ \vdots \\ x_K \\ x_{K+1} \\ x_{K+2} \\ \vdots \\ x_{2K} \end{bmatrix}$$

where $d_1 = (r_1, \phi_1)$, $d_2 = (r_2, \phi_2)$ are the estimated range and azimuth bins of the same detected target at two points along the trajectory, subject to a group-sparsity constraint or penalty in terms of the norm $\|x\|_{G,1}$ as above, i.e.

$$\|x\|_{G,1} = \sqrt{|x_1|^2 + |x_{K+1}|^2} + \sqrt{|x_2|^2 + |x_{K+2}|^2} + \cdots + \sqrt{|x_K|^2 + |x_{2K}|^2},$$

where in this particular case, the partition of entries among groups is given by the label vector $1_2 \otimes (1, 2, \ldots, K)$. We refer to the above model as group-sparsity model for range fusion.

Note that $s_{\text{group-sparsity}}$ can be used in the same context as $s_{\text{step-by-step}}$ discussed above for azimuth estimation, height estimation, and in principle for joint estimation as well, where in each case the problem data $\{y^{(i)}, A^{(i)}\}$ are defined correspondingly. The computational load, for an array of a given number of Tx and Rx elements, varies for $s_{\text{group-sparsity}}$ and $s_{\text{step-by-step}}$ in terms of the number of points in the filtering interval: For the step-by-steo the computational growth is linear on the number of points, whereas for group-sparsity, the growth is polynomial.

EMBODIMENT 3.C: GROUP-SPARSITY WITH MOVING WINDOW FOR AZIMUTH AND HEIGHT ESTIMATION

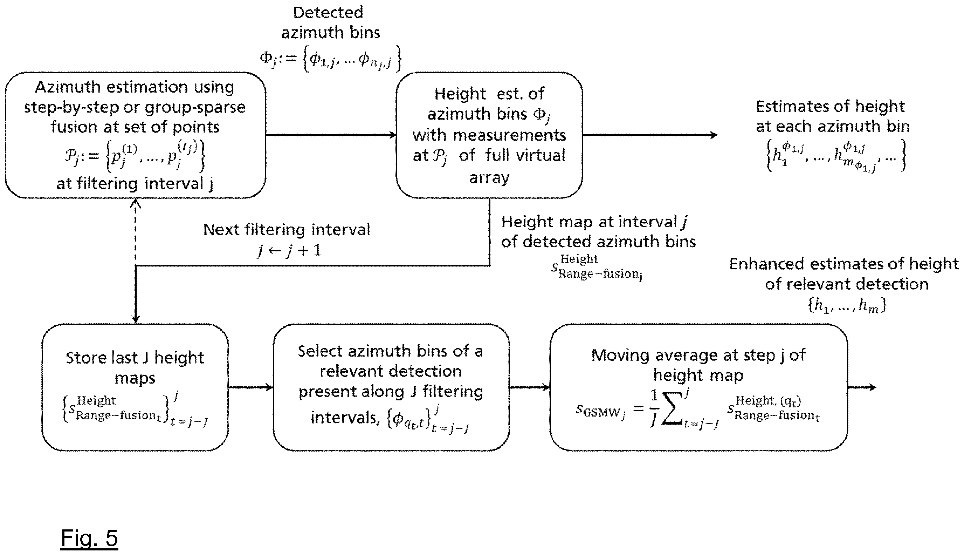

Previous embodiments 3.A and 3.B for combining information along the trajectory describe two methods: step-by-step and group-sparse range fusion, respectively. Both entail an average over a set of sparse reconstructions at different distances to the considered detection; in the first case the sparse reconstructions are solved individually, and in the second case they are coupled by a group-sparsity constraint. Both strategies are valid for azimuth and/or height estimation, and in both cases data and hypotheses consistency is needed during the filtering interval. Hypotheses consistency is achieved for azimuth by considering a short filtering interval or correcting for the motion of the vehicle if odometry systems are available, and for height estimation, this assumption is satisfied provided that the road is flat, by considering at each filtering interval the corresponding azimuth bins, which can vary between filtering intervals. This motivates the following advantageous embodiment for filtering along the trajectory for sequential azimuth and height estimation that we refer to as group-sparsity with moving window (GSMW), particularly to deal with the challenging scenario where the number and values of the azimuth bins may change between filtering intervals, e.g., depending on the road scenario. Fig. 5 contains a flow chart for this process that we describe next.

First, azimuth estimation is performed using filtering strategies 3.A or 3.B for a short filtering interval to ensure hypothesis consistency. We refer to either of the strategies, using $s_{\text{group-sparsity}}^{\text{Azimuth}}$ or $s_{\text{step-by-step}}^{\text{Azimuth}}$ as generic

$S_{\text{Range-fusion}_j}^{\text{Azimuth}}$ at filtering interval j (see Fig. 4.A), where the problem data for azimuth estimation

$$\left\{y^{(i)}, A^{(i)}\right\}_{\text{Interval } j}^{\text{Azimuth}}$$

are given at points $\left\{p_j^{(1)}, \dots, p_j^{(I_j)}\right\}$ as described in embodiments 1, 3.A and 3.B. Upon thresholding of $S_{\text{Range-fusion}_j}^{\text{Azimuth}}$ we obtain estimates of the azimuth bins $\{\phi_{1,j}, \dots \phi_{n_j,j}\}$. Note that due to the moving reference frame, the azimuth bins $\{\phi_{1,j}, \dots \phi_{n_j,j}\}$ can change over each filtering interval j, and the number of them can also vary.

Second, at each of said filtering intervals $\left\{p_j^{(1)}, \dots, p_j^{(I)}\right\}$ (see Fig. 4.B), the estimated azimuth bins $\{\phi_{1,j}, \dots \phi_{n_j,j}\}$ are used to formulate the sparse reconstructions systems for height estimation with problem data

$$\left\{y^{(i)}, A^{(i)}\right\}_{\text{Interval } j}^{\text{Height}}$$

as described in embodiments 1, 3.A and 3.B. We refer to either of the strategies, using $S_{\text{group-sparsity}}^{\text{Height}}$ or $S_{\text{step-by-step}}^{\text{Height}}$ as generic $S_{\text{Range-fusion}_j}^{\text{Height}}$. For each estimated azimuth bin, we obtain the height of possibly more than one scatterer, e.g., for $\phi_{1,j}$ we obtain $\left\{h_1^{\phi_{1,j}}, \dots, h_{m_{\phi_{1,j}}}^{\phi_{1,j}}\right\}$.

Third, the estimation of the height, provided that the road is sufficiently flat, can be optionally enhanced by further averaging the height maps as follows. The information that needs to be stored comprises, for the last J filtering intervals $t = j - J, \dots, j$, the height maps $S_{\text{Range-fusion}_t}^{\text{Height}}$ and the corresponding azimuth bins $\{\phi_{1,t}, \dots \phi_{n_t,t}\}$. Next, azimuth bins are selected $\left\{\phi_{q_t,t}\right\}_{t=j-J}^{j}$ that are identified in some manner with a common relevant detection, e.g., a potential obstacle, for all the filtering intervals $t = j - J, \dots, j$. As noted earlier, this azimuth value can vary over j due to the moving reference frame. The enhanced estimate of height is computed thresholding the quantity

$$s_{\text{GSMW}} := \frac{1}{J} \sum_{t=j-J}^{j} s_{\text{Range-fusion}_t}^{\text{Height, }(q_t)}$$

where super-index $(q_t)$ denotes the block index of $S_{\text{Range-fusion}_t}^{\text{Height}}$ corresponding to the selected common detection among the azimuth blocks. At each filtering interval j, the block index $q_j$ can vary as well, because it depends on the selected ordering of blocks of hypotheses of height for each azimuth bin chosen for the construction of the sensing matrix as described in embodiment 1. Upon thresholding of $s_{\text{GSMW}}$, we obtain the enhanced estimates of the height of the scatterers present in the selected detection.

MOTIVATION AND OUTLINE FOR MULTI-SENSOR FUSION

In previous embodiments we have considered measurements from a coherent array for azimuth and height estimation, and we have considered the problem of combining measurements along the trajectory of the vehicular radar. The estimates obtained can be further improved combining measurements from two sensors, or achieving sufficient performance with incoherent arrays with fewer elements, because of the following advantages: i) more spatial diversity of paths from Tx to target to Rx, and ii) more information in the amplitude of the signal because the pattern of constructive-destructive interference varies with the height of the sensor, which is leveraged directly in the following embodiment 4.B or indirectly noting that it is more likely that at least one sensor is in the region of constructive interference where the SNR is higher. As described in the introduction, some of these effects hold for the complementary problem of azimuth estimation which in our framework is instrumental for more reliable height estimation. Our embodiments include the case of array sensors at different heights, and/or separated horizontally, including coordinate transformations if the orientations or FoVs are different.

EMBODIMENT 4.A: INCOHERENT GROUP-SPARSITY MULTI-SENSOR-FUSION

An advantageous embodiment of the present invention leverages the group-sparsity technique described above not only for combining measurements incoherently taken at different distances along the trajectory of the vehicle, but also for combining incoherently information from multiple array sensors that are incoherent. Consider the definition of near-field steering vector and multi-path steering vector above and consider the natural extension of those definitions for two coherent array blocks, $v_d^{b_1}$, $v_d^{b_2}$, where $b_1$ and $b_2$ stand for coherent array blocks 1 and 2, also called here sensing blocks. For instance, in a particular embodiment one sensing block may comprise a set of coherent receivers, and a set of coherent transmitters, and the second sensing block may comprise the same set of receivers but a second set of transmitters that are non-synchronized with the first set (see Fig. 6). Note that for 2 sensor arrays with possibly multiple transmitters and receivers there are 4 such combinations of transmitters and receivers in different sensors. Other sources of incoherency may be vibrations in the vehicle or sets of receivers that are not synchronized.

Fig. 6 shows a possible arrangement of the sensors, one in the bumper, two on the sides, and one on top of the windscreen. We recall that for coherent processing described in the embodiments 1 and 3 under unknown height, azimuth estimation requires horizontally aligned Tx elements, and similarly horizontally aligned Rx elements. For incoherent multi-sensor fusion this condition is unnecessary and two incoherent arrays can be used for azimuth estimation even if they are placed at different heights because the contribution to the phase in mutually incoherent antennas due to the unknown height is subsumed in the assumption of incoherency.

To illustrate our model for group-sparse sensor fusion, consider the problem of height estimation. This formulation is equivalently formulated for azimuth estimation and indeed, it generalizes embodiments 1, 2 and 3. Assume for simplicity a single azimuth bin, i.e., consider measurements from each combination of transmitters and receivers in each coherent sensing block, $y^{b_1}$ and $y^{b_2}$, corresponding to the range-Doppler bin of the same detection, and consider the following system, where the hypotheses of height are written with respect to a common reference frame for both sensing blocks,

$$
\begin{bmatrix} | \\ y^{b_1} \\ | \\ | \\ y^{b_2} \\ | \end{bmatrix} \approx \begin{bmatrix} \begin{bmatrix} | & | & & | \\ v_d^{b_1}(h_1) v_d^{b_1}(h_2) \cdots v_d^{b_1}(h_K) \\ | & | & & | \end{bmatrix} & 0_{MM' \times K} \\ 0_{MM' \times K} & \begin{bmatrix} | & | & & | \\ v_d^{b_2}(h_1) v_d^{b_2}(h_2) \cdots v_d^{b_2}(h_K) \\ | & | & & | \end{bmatrix} \end{bmatrix} \begin{bmatrix} x_1 \\ x_2 \\ \vdots \\ x_K \\ x_{K+1} \\ x_{K+2} \\ \vdots \\ x_{2K} \end{bmatrix},
$$

subject to a group-sparsity constraint or penalty in terms of the norm $\|x\|_{G,1}$, i.e.

$$
\big\|x\big\|_{G,1} = \sqrt{|x_1|^2 + \big|x_{K+1}\big|^2} + \sqrt{|x_2|^2 + \big|x_{K+2}\big|^2} + \cdots + \sqrt{|x_K|^2 + \big|x_{2K}\big|^2}
$$

where, as in the example for the fusion over two distances along the trajectory, the partition of entries among groups is given by the label vector $1_2 \otimes (1, 2, \dots, K)$.

The block-diagonal structure of the above sparse reconstruction system allows the necessary degrees of freedom to account for an unknown random phase between measurements of Tx, Rx pairs in different sensing blocks, and also different amplitudes that modulate the multi-path steering vector at each sensing block. The group-sparsity constraint or penalty couples the sparse reconstruction coefficients to encourage the same choice of height hypothesis in the reconstruction of the signal based on the measurements from the two sensing blocks.

The estimated height is then given by the hypotheses obtained by thresholding

$$s_{\text{group-sparsity}} := \frac{1}{2} \sum_{i=1}^{2} |x^{(i)}| = \frac{1}{2} \left( |[x_1, \cdots, x_K]| + |[x_{K+1}, \cdots, x_{2K}]| \right).$$

We refer to the above model as group-sparsity model for sensor fusion. The generalization to more than two sensing blocks is analogous to the group-sparsity model for range fusion.

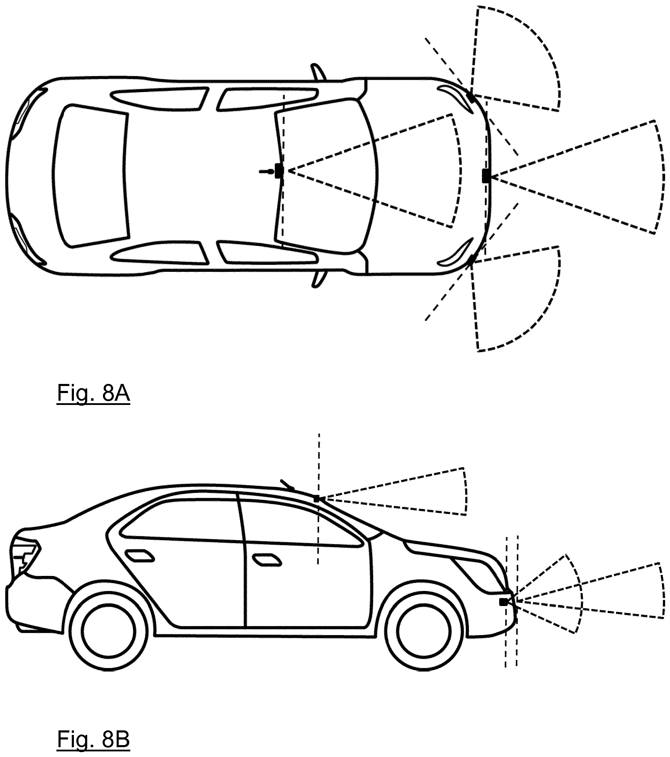

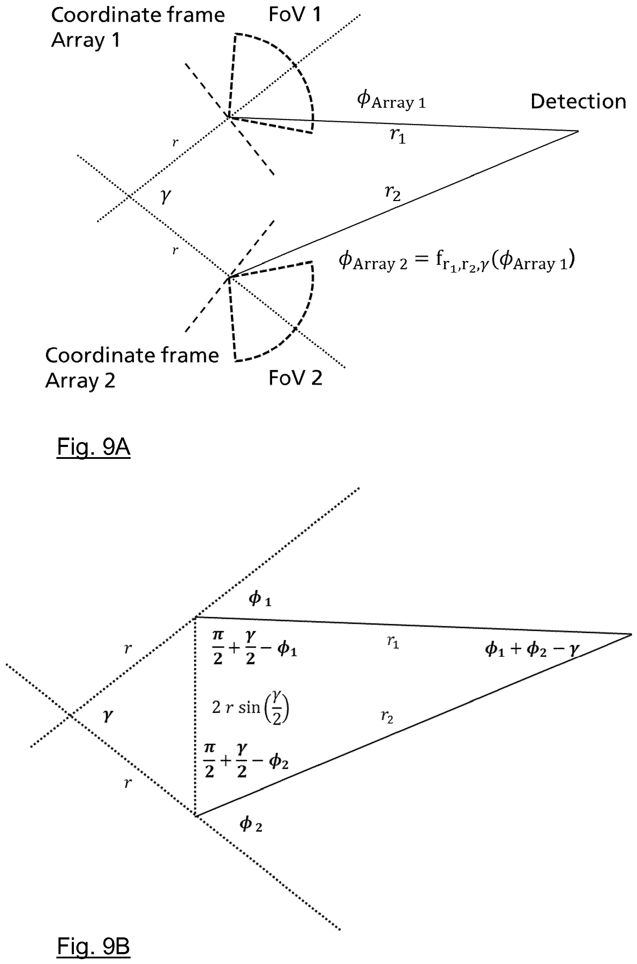

In the case where the sensors have different orientations (see Fig. 8), a coordinate transformation is necessary to associate equivalent hypotheses of azimuth in a common reference frame, e.g., with respect to one of the arrays. This is necessary because the group-sparsity constraint associates columns of the sensing matrix that represent the same hypothesis. Figs. 9A and 9B illustrate the transformation of the azimuth coordinate between the reference frames of array 1 and array 2, given by a mapping

$$\phi_{Array\,2} = f_{r,r_1,r_2,\gamma}\left(\phi_{Array\,1}\right).$$

This mapping depends on the angle y between the boresight directions of both arrays, the distance r (cf. Fig. 9A), and the distances to the detection $r_1$, $r_2$ from the origin of each array, and follows from standard trigonometric relations, e.g., law of sines (cf. Fig. 9B). If one of the hypothesis of azimuth corresponds to an angle that does not belong to the field of view of one of the sensors, i.e., that is a blind spot, the corresponding column in the sensing matrix is set equal to the vector of zeros, modelling the fact that only noise can be measured at that angle.

The group sparsity approaches for range fusion in embodiment 3.B and for sensor fusion above are formally analogous and share the same intuition; in the latter, array measurements are combined from mutually incoherent arrays; and in the former, measurements taken at different distances are combined. Both approaches can be performed for sequential estimation of azimuth and height in embodiment 1 and, in principle, also for joint estimation of azimuth and height in embodiment 2. From a complexity standpoint, in the latter case, the number of rows of the sensing matrix is the product of the number of Tx and Rx elements in each mutually incoherent array, times the number of distances; and the number of columns is the number of combinations of hypotheses of azimuth and height, times the number of incoherent arrays, times the number of distances. These numbers need to be selected judiciously to keep the problem tractable, depending on the computation or memory constraints. The number of distances has to be small in the case of joint estimation to ensure hypothesis consistency, so the main limiting factor is the product of hypotheses of azimuth and height that determine the number of columns. The embodiments using sequential estimation of azimuth and height require less computations and memory. The least computationally expensive option is the step-by-step model for range fusion that is valid for sensor fusion as well, yielding a computation complexity that grows linearly with the number of mutually incoherent sensing blocks.

EMBODIMENT 4.B: FALSE-COHERENT PROCESSING MODEL FOR MULTI-SENSOR FUSION

The problem of two coherent sensors is a particular case of the model for one sensor introduced in embodiments 1 and 2, where a big coherent aperture is induced by the distance between the sensors. This model is a useful approximation also for mutually incoherent array sensors because the entries of the multi-path steering vector contain not only phase information, but also the amplitudes modulated by the interference of the path contributions. These amplitudes vary with the position of the Tx and Rx elements and contain useful information for reconstructing the signal in terms of the wanted height even when the phase differences are erroneous between incoherent sensors. The sparse reconstruction model assuming coherency between sensors is as follows,

$$
\begin{bmatrix} | \\ y^{b_1} \\ | \\ | \\ y^{b_2} \\ | \end{bmatrix}
\approx
\begin{bmatrix} \begin{bmatrix} | & | & & | \\ v_d^{b_1}(h_1) & v_d^{b_1}(h_2) & \cdots & v_d^{b_1}(h_K) \\ | & | & & | \end{bmatrix} \\ \begin{bmatrix} | & | & & | \\ v_d^{b_2}(h_1) & v_d^{b_2}(h_2) & \cdots & v_d^{b_2}(h_K) \\ | & | & & | \end{bmatrix} \end{bmatrix}
\begin{bmatrix} x_1 \\ x_2 \\ \vdots \\ x_K \end{bmatrix},
$$

subject to a standard sparsity promoting constraint or penalty, e.g., in terms of the 1-norm $\|x\|_1$. The solution is found by thresholding $s = |[x_1, \ldots x_K]|$ as in embodiments 1 and 2. Note that this system lacks the block-diagonal structure, i.e., this model constrains the phase differences between antennas in different arrays as if those differences could be measured. We refer to the above model as vertical-concatenation/false-coherency model with joint normalization for sensor fusion.

A consequence of not having a block-diagonal structure is that the column-wise normalization is performed considering jointly the blocks for the two sensors. This is important for keeping the information of relative amplitude of the interference signal sampled at different Tx, Rx elements.

EMBODIMENT 5: GROUP-SPARSITY MODEL FOR UNKNOWN REFLECTION COEFFICIENT

Previous embodiments use a model of multi-path steering vectors that are the sum of four path contributions for a complex reflection coefficient assumed known, including attenuation and phase-shift due to the interaction with the ground. Next we propose embodiments that relax this assumption. The motivation is that in general an unknown fraction of the signal can be absorbed or diffusely reflected due to roughness of the ground, particularly in the case of a milimeter-wave signal impinging on a road, and our model of four paths needs to account for the possibility that some of the path contributions are more or less attenuated than initially predicted. The proposed embodiments consider A) decompositions of the multi-path model into independent contributions for each propagation path, B) multi-path models for a grid of hypothetical values of the complex reflection coefficient; and C) dictionary learning, where the multi-path hypotheses are parametrized by unknown parameters that are jointly estimated. These embodiments extend the approach for height estimation in embodiments 1 - 4 and have the effect of improving the reliability of height estimation, making it robust to modeling uncertainties.

EMBODIMENT 5.A: GROUP-SPARSITY MODEL FOR DECOMPOSITION OVER INDIVIDUAL PATH CONTRIBUTIONS

In this embodiment the received signal is reconstructed as super-position of independent path contributions. The key idea is that the individual contributions are constrained to be selected corresponding to the same hypothesis of height, and this is achieved again with a group-sparsity model.

For example, we are including in our model the cases that some contributions, e.g., from the reflected-reflected (RR) path, may be absent in the signal or strongly attenuated. Another example includes post-processing using polarization techniques that allow to separate paths with even and odd number of bounces. We enable the above degrees of freedom by using four unknown complex coefficients in the sparse reconstruction for each hypothesis of height corresponding to each individual path contribution, i.e., DD, RD, DR and RR, and we establish that they belong to the same group if they represent the same hypothesis of height. There is no sparsity penalization within groups because the signal is represented additively inside a given group, but we promote sparsity between groups of competing hypotheses of height. This corresponds to a relaxation of the mult-path model in (1) that can be written as

$$v_d^{\text{Any paths}}(h) := \beta_1 v_d^{DD}(h) + \beta_2\, v_d^{DR}(h) + \beta_3 v_d^{RD}(h) + \beta_4 v_d^{RR}(h),$$

where $\beta_i \in \mathbb{C}$ are arbitrary.

To illustrate the above decomposition, we exemplify the case of height estimation for a single detected azimuth value, and for a single distance to the target. The data points y correspond, as for the height estimation problem in embodiment 1, to a given range-Doppler bin of the signal sampled by the receivers upon transmission from each of the transmitters, for a single azimuth detection for simplicity of exposition. The system takes the form

$$y \approx \left[\begin{bmatrix} | & & | \\ v_d^{DD}(h_1) \cdots v_d^{DD}(h_K) \\ | & & | \end{bmatrix} \begin{bmatrix} | & & | \\ v_d^{DR}(h_1) \cdots v_d^{b,DR}(h_K) \\ | & & | \end{bmatrix} \cdots \begin{bmatrix} | & & | \\ v_d^{RR}(h_1) \cdots v_d^{RR}(h_K) \\ | & & | \end{bmatrix}\right] \begin{bmatrix} x_1 \\ \vdots \\ x_K \\ x_{K+1} \\ \vdots \\ x_{2K} \\ \vdots \\ x_{4K} \end{bmatrix}$$

subject to a group-sparsity constraint, or penalty, in terms of

$$\|x\|_{G,1} = \sqrt{|x_1|^2 + \left|x_{K+1}\right|^2 + |x_{2K+1}|^2 + |x_{3K+1}|^2} + \sqrt{|x_2|^2 + \cdots + |x_{3K+2}|^2} + \cdots$$

where the partition of entries among groups is given by the label vector $1_4 \otimes (1, 2, \ldots, K)$, i.e., the hypotheses of height considered repeated for each of the four path contributions.

The solution to the estimation problem is then given by the hypotheses obtained by thresholding

$$s^{\text{Height,DD,DR,RD,RR}} := \frac{1}{4} \sum_{i=1}^{4} |[x_{(i-1)K+1}, \cdots, x_{iK}]|.$$

The intuition of this thresholding procedure is that the average of the absolute values of the sparse reconstruction coefficients over the four contributions contains the average amplitude associated to each hypothesis. We refer to the above model as group-sparsity model for individual-path contributions.

A key consequence of the group-sparsity model for independent path contributions is that the amplitude and phase associated to each path is estimated as part of the sparse reconstruction solution. This is in contrast with the multi-path steering vector in (1) that assumes a known attenuation and phase shift produced by the interaction with the ground. Four paths are required in the above decomposition for the near-field model. The extension to the cases of multiple azimuth bins, and range and sensor fusion in embodiments 3 and 4 are straightforward. One potential caveat of this method is that there may be ambiguities due to individual path contributions of a wrong hypotheses that are more correlated with the received multipath signal. This caveat is avoided in the next embodiment.

EMBODIMENT 5.B: GROUP-SPARSITY MODELS FOR JOINT HEIGHT AND REFLECTION COEFFICIENT ESTIMATION

This method considers combinations of hypotheses of height and reflection coefficient according to the model in (1). The difference with the previous embodiment is that instead of decomposing the signal as arbitrary super-position of independent path contributions, we restrict the choices to multiple hypothetical values of the complex reflection coefficient in a grid of values $\{\rho_1, \ldots, \rho_{K_\rho}\}$, where $K_\rho$ is the number of values considered. Our experience shows that big off-grid errors are tolerated for the attenuation factor (using the polar expression), and therefore this grid can be coarse if the reflection phase shift is approximately known. For example, one choice is assuming that the phase shift is 180 degrees, which is a reasonable assumption for planar surfaces and small incident angles measured from the ground (Knott, 1993), and considering attenuation values in a grid {.8, .6, .5,.4, .3, .2}, i.e., $\{\rho_1, \ldots, \rho_6\} = e^{j\pi}\{.8,.6,.5,.4,.3,.2\}$.

Formally, the sparse reconstruction problem for height estimation for a single azimuth bin takes the form,

$$y \approx \begin{bmatrix} | & | & | & | \\ v_d(h_1, \rho_1) \cdots v_d(h_{K_h}, \rho_1) & \cdots & v_d(h_1, \rho_{K_\rho}) \cdots v_d(h_{K_h}, \rho_{K_\rho}) \\ | & | & | & | \end{bmatrix} \begin{bmatrix} x_1 \\ \vdots \\ x_{K_h} \\ \vdots \\ x_{K_\rho(K_h-1)+1} \\ \vdots \\ x_{K_\rho K_h} \end{bmatrix}$$

subject to a sparsity constraint for which the following two choices offer satisfactory results. The first option uses the 1-norm $\|x\|_1$, which penalizes individual combinations of height and reflection coefficient, and finds the optimal height by thresholding the vector $s^{\text{Height},\rho,\text{pooling}}$ defined as

$$s^{\text{Height},\rho,\text{pooling}}(i_h) := \max_{i_\rho}\left\{\left|x_{i_\rho(i_h-1)+1}\right|, \ldots, \left|x_{i_\rho\,i_h}\right|\right\}$$

which we refer to as pooling over reflection coefficients. Pooling has significance for sensor and range fusion because the reflection coefficient can vary between measurements at multiple distances to the target or between measurements from multiple sensors. In embodiments 3 and 4, the pooling operation is computed before averaging the reconstruction blocks at multiple distances or from multiple sensors.

The second option uses the group-sparsity norm

$$\left\lVert x \right\rVert_{G,1} := \sqrt{|x_1|^2 + \left\lvert x_{K_h+1} \right\rvert^2 + \cdots + \left\lvert x_{(K_\rho-1)K_h+1} \right\rvert} \\ + \sqrt{|x_2|^2 + \left\lvert x_{K_h+2} \right\rvert^2 + \cdots + \left\lvert x_{(K_\rho-1)K_h+2} \right\rvert} + \cdots \\ + \sqrt{\left\lvert x_{K_h} \right\rvert^2 + \left\lvert x_{2K_h} \right\rvert^2 + \cdots + \left\lvert x_{K_\rho K_h} \right\rvert} \,,$$

which associates to each group the hypotheses that belong to the same height, regardless of the reflection coefficient, i.e., this group-sparsity structure has label vector $\mathbf{1}_{K_\rho} \otimes (1, 2, \ldots, K)$. The estimate of height is then found by thresholding the quantity

$$s^{\text{Height},\rho,\text{groups}} := \frac{1}{K_\rho} \sum_{i_\rho=1}^{K_\rho} |x^{(i_\rho)}|$$

where $x^{(i_\rho)}$ is the block of coefficients for all the height hypotheses corresponding to hypothesis of reflection coefficient $\rho_i$,

$$x^{(i_\rho)} := \left[ x_{(i_\rho-1)K_h+1}, \ldots, x_{i_\rho K_h} \right].$$

The average performed for $s^{\text{Height},\rho,\text{groups}}$ is alternative to the pooling operation in $s^{\text{Height},\rho,\text{pooling}}$ and also the sparsity penalty is different in both cases.

The embodiments 5.A and 5.B can be readily combined with group-sparsity models for range and sensor fusion by constructing a block-diagonal sensing matrix as described in embodiments 3.B and 4.A with diagonal blocks corresponding to each sensing block and each distance to the target. The partition of entries in the sparse reconstruction corresponds, for the case of independent path contributions in 5.A, to the label vector

$$\mathbf{1}_{\#\text{Paths}} \otimes \mathbf{1}_{\#\text{Sensing Blocks}} \otimes \mathbf{1}_{\#\text{Ranges}} \otimes (1, \ldots, K),$$

and, for the case of hypotheses of reflection coefficient in 5.B, to the label vector

$$\mathbf{1}_{K\rho} \otimes \mathbf{1}_{\#\text{Sensing Blocks}} \otimes \mathbf{1}_{\#\text{Ranges}} \otimes (1, \ldots, K),$$

i.e., the hypotheses of height repeated for each path in the decomposition or each reflection coefficient, and repeated as well for each sensing block and each range from the considered detection (i.e., each point along the trajectory). A summary of the partition of columns of the sensing matrix for the proposed group-sparsity models is described in Table 1.

EMBODIMENT 5.C: PARAMETRIC DICTIONARY LEARNING FOR ESTIMATION OF REFLECTION COEFFICIENT AND HEIGHT

This method estimates the contributions from the independent paths as an intermediate step of learning a dictionary that allows an accurate representation of the measured signal. One possibility is to parametrize the dictionary as a linear combination of sub-dictionaries. For example, one such parametrization is

$$A(\beta) = \beta_1 A^{DD} + \beta_2 A^{DR} + \beta_3 A^{RD} + \beta_4 A^{RR}$$

where, in resemblance with embodiment 5.A, the parameters $\beta = \{\beta_1, .., \beta_4\}$ are complex numbers and the matrices $A^{DD}$, $A^{DR}$, $A^{RD}$, $A^{RR}$ are sub-dictionaries based on the individual path contributions for all the hypotheses of height, i.e.,

$$A^{DD} := \begin{bmatrix} | & & | \\ v_d^{DD}(h_1) & \cdots & v_d^{DD}(h_K) \\ | & & | \end{bmatrix},$$

and the other sub-dictionaries are similarly defined. The problem is then to minimize the fitting error $y \approx A(\beta)x$ in terms of $\beta \in \mathbb{C}^4$ and $x = [x_1, \ldots, x_K] \in \mathbb{C}^K$ subject to a sparsity constraint or penalty, e.g., in terms of $\|x\|_1$. Methods for solving this problem include, e.g., (Gribonval, et al., 2012). The estimate of height is obtained thresholding

$$s^{\text{Height,dict.}} = |[x_1, \cdots, x_K]|.$$

This embodiment can be readily combined with either of embodiments 1, 2, and 3.A. The combination with sensor fusion is also direct under embodiment 4.B. The combination with either of embodiments 3.B or 4.A yields a group sparsity model with dictionary learning and requires solution procedures combining the techniques in (Gribonval, et al., 2012) and (Chi, et al., 2013).

TABLE WITH GROUP-SPARSITY MODELS

Table 1

| Estimation task and embodiment reference | Group-sparsity model (label vector) | Structure of sensing matrix |
|---|---|---|
| Azimuth estimation (embodiment 1) | $(1, 2, ..., K)$ | Horizontal stacking as columns of steering vector model for height hypotheses |
| Height estimation, assuming L detected azimuth bins (embodiment 1) | $(1, 2, ..., K, ..., KL)$ | Horizontal stacking of height hypotheses for each detected azimuth bin |
| Joint azimuth and height estimation (embodiment 2) | $(1, 2, ..., K_h K_\phi)$ i.e., for combinations of $K_h$ hypotheses of height and $K_\phi$ hypothesis of azimuth | Horizontal stacking of combinations of hypotheses of azimuth and height |
| Azimuth and/or height estimation with group-sparse coupling over a set of **measurements along a filtering interval** (for 1 azimuth bin) (embodiment 3.B) | $1_{\#\text{Ranges}} \otimes (1, 2, ..., K)$ Where $1_{\#\text{Ranges}}$ has as many ones as measurements taken at points along the trajectory (filtering interval) | Block-diagonal stacking of multipath hypotheses for each distance |
| Height or azimuth estimation for **multiple incoherent arrays** (for 1 azimuth bin and 1 measurement) (embodiment 4.A) | $1_{\#\text{Sens.blocks}} \otimes (1, 2, ..., K)$ Where $1_{\#\text{Sensing block}}$ has as many ones as mutually incoherent sensing blocks | Block-diagonal stacking of multipath hypotheses for each sensing block (i.e., each set of coherent Tx and Rx pairs) |
| Height estimation using independent-path contributions or hypotheses of reflection coefficient (embodiment 5.A and 5.B, respectively) | $1_{\#\text{Paths}} \otimes (1, 2, ..., K_h)$, or $1_{K_\rho} \otimes (1, 2, ..., K_h)$ Where #Paths is usually 4 (DD,DR,RD,RR) and $K_\rho$ is the number of hypotheses for the reflection coefficient $\rho$ | Horizontal stacking of near-field steering vectors for each path contribution (or value of reflection coefficient) and for each hypothesis of height |
| General for height estimation (embodiment 5.A with either of 1-4, particularly 3.B and 4.A) | $1_{\#\text{Paths}} \otimes 1_{\#\text{Sensing Blocks}} \otimes 1_{\#\text{Ranges}} (1, ..., K)$ | Horizontal stacking of individual path contributions and azimuth bins, and block-diagonal stacking for hypotheses that are mutually incoherent, both from multiple sensing blocks or from multiple points along the trajectory |

TABLE OF NOTATIONS

Table 2

| Notation | Definition |
|---|---|
| $\mathbb{C}^K$, $\mathbb{C}^{M \times K}$ | Vector space of complex vectors or matrices for generic K, M |
| r, $\phi$, h | Cylindrical coordinates of target from ego-vehicle (distance, azimuth, and height) |
| $d_x$, $d_y$, h | Cartesian coordinates of target from ego-vehicle (longitudinal distance, lateral distance, and height) |
| A | Sensing matrix for model of interest |
| y | Observation/data signal (vector) for model of interest |
| x | Sparse reconstruction coefficient vector |
| $x^{(i)}$, $x^U$ | Sparse reconstruction for individual coherent measurement i, and for union U under a group-sparsity coupling, respectively |
| $\lambda$ | Wavelength |
| $r_{Tx_i\text{-Tar-}Rx_j}(h)$ | Path distance from transmitter $Tx_i$ to a scatterer located at height h, and back to receiver $Rx_j$ |
| $\left[v_{(r,\phi)}^{b,\,\text{path}}(h)\right]_{i,j}$ | Entry $i, j$ of near-field steering vector: phase rotation along a given path from $Tx_i$ to a scatterer located at planar Cylindrical coordinates d = (r, $\Phi$) with height h, and back to $Rx_j$, defined as $$\left[v_{(r,\phi)}^{b,\,\text{path}}(h)\right]_{i,j} = e^{\frac{i2\pi}{\lambda} r_{Tx_i - \text{Tar}-Rx_j}(h)}$$ In the case of two or more mutually incoherent array blocks, we use the superscript b to denote each coherent array block. The path can be direct-direct (DD), direct-reflected (DR), reflected-direct (RD), and reflected-reflected (RR) |
| $\rho$ | Reflection coefficient (complex valued) |
| $v_d^{4\text{paths}}(h)$, or $v_d(h)$ | Multi-path steering vector, which contains phase information and amplitude information due to interference among the four path signals |
| $s^{\text{Azimuth}}$ | Azimuth map: vector of entry-wise absolute values of reconstruction coefficients for K azimuth hypotheses $\{\phi_1, ..., \phi_K\}$ or alternatively, transversal displacement $\{y_1, ..., y_K\}$ $$s^{\text{Azimuth}} = |[x_1, \cdots, x_K]|$$ |
| $s^{\text{Height},\{\phi_1,...,\phi_n\}}$ | Height map: vector of entry-wise absolute values of reconstruction coefficients for K hypotheses of height for each previously estimated azimuth bin $\{\phi_1, ..., \phi_n\}$ (or $\{y_1, ..., y_n\}$) $$s^{\text{Height},\{\phi_1,...,\phi_n\}} = |[x_1, \cdots, x_K, \cdots, x_{(n-1)K+1}, \cdots, x_{n \times K}]|$$ |
| $s^{\text{Joint}}$ | Joint map for azimuth and height: vector of entry-wise absolute values of reconstruction coefficients for combinations of hypotheses of height and azimuth $$s^{\text{Joint}} = |[x_1, \cdots, x_{K_h}, \cdots, x_{K_\phi(K_h-1)+1}, \cdots, x_{K_\phi K_h}]|$$ |
| $\{p_1, ..., p_l\}$ | Points in a filtering interval wherein measurements are combined using step-by-step or group-sparsity range fusion |
| $s_{\text{step-by-step}}$ | Average of sparse reconstruction blocks at the set of points $\{p_1, ..., p_l\}$ in the filtering interval, for azimuth or height estimation $$s_{\text{step-by-step}} = \frac{1}{I}\sum_{i=1}^{I} |x^{(i)}|$$ |

(continued)

| Notation | Definition |
|---|---|
| $s_{\text{group-sparsity}}$ | Average of sparse reconstruction blocks computed under a group-sparsity constraint with measurements at the set of points $\{p_1, ..., p_l\}$ along the filtering interval, for azimuth or height estimation $$s_{\text{group-sparsity}} = \frac{1}{I}\sum_{i=1}^{I} |\tilde{x}^{(i)}|$$ Where $\tilde{x}$ contains the coefficients of the sparse reconstruction under the coupling group-sparsity constraint (and the notation for $\tilde{x}$ is replaced by $x$ for convenience) |
| $s_{\text{Range-fusion}j}$ | Generic, either $s_{\text{step-by-step}}$, or $s_{\text{group-sparsity}}$ at filtering interval j |
| $\{\phi_{1,j}, ..., \phi_{n_j,j}\}$ | Azimuth bins detected in filtering interval j |
| $q$ | Index for a relevant azimuth detection (range-Dopplerazimuth) to denote the block in the sensing matrix and associated reconstruction coefficients corresponding to hypotheses of height for that azimuth bin |
| $s_{\text{GSMW}}$ | Height map according to group-sparsity with moving window: Average across multiple filtering intervals of the blocks corresponding to the same azimuth detection of the height maps obtained with step-by-step or group-sparsity $$s_{\text{GSMW}} = \frac{1}{J}\sum_{t=j-J}^{j} s_{\text{Range-fusion}_t}^{(q_t)}$$ Note that the azimuth bin of the relevant detection can have a different index $q_t$ at each filtering interval t. |
| $s^{\text{Height,DD,DR,RD,RR}}$ | Height map under group-sparse coupling of independent path contributions $$s^{\text{Height,DD,DR,RD,RR}} = \frac{1}{4}\sum_{i=1}^{4} |[x_{(i-1)K+1}, \cdots, x_{iK}]|.$$ |
| $s^{\text{Height},\rho,\text{pooling}}$ | Height map under pooling of hypotheses of reflection coefficient with 1-norm sparsity coupling $$s^{\text{Height},\rho,\text{pooling}}(i_h) = \max_{i_\rho}\left\{\left|x_{i_\rho(i_h-1)+1}\right|, ... , \left|x_{i_\rho\, i_h}\right|\right\}$$ |
| $s^{\text{Height},\rho,\text{groups}}$ | Height map under group-sparse coupling of reflection coefficients $$s^{\text{Height},\rho,\text{groups}} = \frac{1}{K_\rho}\sum_{i_\rho=1}^{K_\rho} |x^{(i_\rho)}|$$ |
| $s^{\text{Height,dict.}}$ | Height map under dictionary learning $$s^{\text{Height,dict.}} = |[x_1, \cdots, x_K]|$$ |
| $|.|$ | Absolute value or magnitude for complex numbers, entry-wise in the case of vectors |
| $(.)^T$ | Transpose operator (without complex conjugation) |
| $1_l$ | Vector of ones of length $l$ |
| $\|x\|_1$ | One-norm of a vector $x \in \mathbb{C}^K$, $$\|x\|_1 = \sum_{k=1}^{K} |x_k|$$ |
| $\|x\|_2$ | Two-norm of a vector $x \in \mathbb{C}^K$, |

(continued)

| Notation | Definition |
|---|---|
| | $$\|x\|_2 = \sqrt{\sum_{k=1}^{K} |x_k|^2}$$ |
| blkdiag($A^1$, $A^2$) | Block-diagonal matrix with diagonal blocks $A^1$, $A^2$ |
| $\|x\|_{G,1}$ | Group-sparsity norm: One-norm of vector whose entries are the two-norms of blocks of entries in $x$ corresponding to the same group $g_l$, for a set of groups $G := \{g_1, ..., g_{\#\text{groups}}\}$, $$\|x\|_{G,1} = \sum_{l=1}^{\#\text{groups}} \left\|x_{k \in g_l}\right\|_2,$$ |
| $\otimes$ | Kronecker product |

BIBLIOGRAPHY

Baraniuk R. und Steeghs P. Compressive Radar Imaging [Konferenz] // IEEE Radar Conference. - 2007. - S. 128-133.

Baransky E. [et al.] Sub-Nyquist radar prototype: Hardware and algorithm [Journal] // IEEE Transactions on Aerospace and Electronic Systems. - 2014. - S. 809-822.

Berg E. van den und Friedlander M. P. Probing the Pareto frontier for basis pursuit solutions [Journal] // SIAM J. on Scientific Computing. - 2008. - S. 890-912.

Berg E. van den und Friedlander M. P. SPGL1: A solver for large-scale sparse reconstruction = http://www.cs.ubc.ca/labs/scl/spgl1. - 2007.

Blumensath T. und Davies M. E. Gradient Pursuits [Journal] // IEEE Transactions on Signal Processing. - 2008. - S. 2370-2382.

Brisken S. und Ender J. Block-sparse 3-D ISAR image reconstruction in a non-coherent multistatic scenario [Konferenz] // IEEE Radar Conference (RadarCon). - 15. - S. 265-269.

Candès E.J. und Fernandez-Granda C. Towards a Mathematical Theory of Super-resolution [Journal] // Communications on Pure and Applied Mathematics. - 2014. - S. 906-956.

Chen Chun-Yang und Vaidyanathan P. P. Compressed sensing in MIMO radar [Konferenz] // 42nd Asilomar Conference on Signals, Systems and Computers. - 2008. - S. 41-44.

Chen S. S., Donoho D. L. und Saunders M. A. Atomic decomposition by basis pursuit [Journal] // SIAM J. Scientific Computation. - 1998. - S. 33-61.

Chi Y. T. [et al.] Block and Group Regularized Sparse Modeling for Dictionary Learning [Konferenz] // IEEE Conference on Computer Vision and Pattern Recognition. - 2013. - S. 377-382.

Cotter S. F. [et al.] Sparse solutions to linear inverse problems with multiple measurement vectors [Journal] // IEEE Trans. on Signal Processing. - 2005. - S. 2477-2488.

Diewald F. [et al.] Radar-interference-based bridge identification for collision avoidance systems} [Konferenz] // IEEE Intelligent Vehicles Symposium (IV). - 2011. - S. 113-118.

Donoho D. L. Compressed sensing [Journal] // IEEE Transactions on Information Theory. - 2006. - S. 1289-1306.

Duarte M. F. und Eldar Y. C. Structured Compressed Sensing: From Theory to Applications [Journal] // IEEE Transactions on Signal Processing. - 2011. - S. 4053-4085.

Efron B. [et al.] Least angle regression [Journal] // Annals of Statistics. - 2004. - S. 407-499.

Eldar Y. C. und Mishali M. Robust Recovery of Signals From a Structured Union of Subspaces [Journal] // IEEE Transactions on Information Theory. - 2009. - S. 5302-5316.

Eldar Y. C., Kuppinger P. und Bolcskei H. Block-Sparse Signals: Uncertainty Relations and Efficient Recovery [Journal] // IEEE Transactions on Signal Processing. - 2010. - S. 3042-3054.

Ender J. H. G. On Compressive Sensing applied to radar [Journal] // Signal Processing. - 2010. - S. 1402-1414.

Engels F. [et al.] Advances in Automotive Radar: A framework on computationally efficient high-resolution frequency estimation [Journal] // IEEE Signal Processing Magazine. - 2017. - S. 36-46.

Engels F., Wintermantel M. und Heidenreich P. Automotive MIMO radar angle estimation in the presence of multipath [Konferenz] // European Radar Conference (EURAD). - 2017. - S. 82-85.

Fortunati S. [et al.] Single snapshot DOA estimation using Compressed sensing [Konferenz] // IEEE International Conference on Acoustics, Speech and Signal Processing (ICASSP). - 2014. - S. 2297-2301.

González-Huici M. A. [et al.] Constrained optimal design of automotive radar arrays using the Weiss-Weinstein bound [Konferenz] // International Conference on Microwaves for Intelligent Mobility (ICMIM). - 2018.

Gorodnitsky I. F. und Rao B. D. Sparse signal reconstruction from limited data using FOCUSS: A re-weighted minimum norm algorithm [Journal] // IEEE Trans. on Signal Processing. - 1997. - S. 2477-2488.

Gribonval R., Chardon G. und L.Daudet Blind Calibration For Compressed Sensing By Convex Optimization [Konferenz] // IEEE International Conference on Acoustics, Speech, and Signal Processing. - 2012.

Herman M. A. und Strohmer T. High-Resolution Radar via Compressed Sensing [Journal] // IEEE Transactions on Signal Processing. - 2009. - S. 2275-2284.

Herman M. und Strohmer T. Compressed sensing radar [Konferenz] // IEEE International Conference on Acoustics, Speech and Signal Processing. - 2008. - S. 1509-1512.

Huang J. und Zhang T. The benefit of group sparsity [Journal] // The Annals of Statistics. - 2010. - S. 1978-2004.

Ibrahim M., Roemer F. und Galdo G. Del On the design of the measurement matrix for Compressed Sensing based DOA estimation [Journal] // IEEE International Conference on Acoustics, Speech and Signal Processing (ICASSP). - 2015. - S. 3631-3635.

Ji S., Dunson D. und Carin L. Multitask Compressive Sensing [Journal] // IEEE Transactions on Signal Processing. - 2009. - S. 92-106.

Knott E. F. Radar Cross Section Measurements [Buch]. - 1993.

Laribi A. [et al.] A new height-estimation method using FMCW radar Doppler beam sharpening [Konferenz] // European Signal Processing Conference (EUSIPCO). - 2017. - S. 1932-1396.

Laribi A. [et al.] Vertical digital beamforming versus multipath height finding [Konferenz] // IEEE International Conference on Microwaves for Intelligent Mobility (ICMIM). - 2017. - S. 99-102.

Laribi A. [et al.] Vertical Doppler Beam Sharpening Goes Self Parking [Konferenz] // IEEE Radar Conference. - 2018.

Mallat S. G. und Zhang Z. Matching pursuits with time-frequency dictionaries [Journal] // IEEE Transactions on Signal Processing. - 1993. - S. 3397-3415.

Olbrich S. und Waldschmidt C. A multipath based height estimation of targets for radar systems [Konferenz] // IEEE International Conference on Microwaves for Intelligent Mobility (ICMIM). - 2017. - S. 37-40.

Pati Y. C., Rezaiifar R. und Krishnaprasad P. S. Orthogonal matching pursuit: recursive function approximation with applications to wavelet decomposition [Konferenz] // Proceedings of 27th Asilomar Conference on Signals, Systems and Computers. - 1993. - S. 40-44.

Rossi M., Haimovich A. M. und Eldar Y. C. Spatial Compressive Sensing for MIMO Radar [Journal] // IEEE Transactions on Signal Processing. - 2014. - S. 419-430.

Subedi S. [et al.] Group Sparsity Based Multi-Target Tracking in Passive Multi-Static Radar Systems Using Doppler-Only Measurements [Journal] // IEEE Transactions on Signal Processing. - 2016. - S. 3619-3634.

Tibshirani R. Regression shrinkage and selection via the Lasso [Journal] // Journal of the Royal Statistical Society. Series B. - 1996. - S. 267-288.

Uysal F., Selesnick I. und Isom B. M. Mitigation of Wind Turbine Clutter for Weather Radar by Signal Separation [Journal] // IEEE Trans. on Geoscience and remote sensing. - 2016. - S. 2925-2934.

Weiß M. Group Sparsity Techniques for Data Fusion of a passive MISO Radar Network [Konferenz] // 17th International Radar Symposium (IRS). - 2016. - S. 1-5.

Wu Shun-jun, Zhang L. und Xing M. d. Super-resolution ISAR imaging via statistical compressive sensing [Konferenz] // Proceedings of 2011 IEEE CIE International Conference on Radar. - 2011. - S. 545-550.

Yu Y., Petropulu A. P. und Poor H. V. Measurement Matrix Design for Compressive Sensingbased MIMO Radar [Journal] // IEEE Transactions on Signal Processing. - 2011. - S. 5338-5352.

Zhang Y. D. [et al.] Multi-sensor kernel design for time-frequency analysis of sparsely sampled nonstationary signals [Journal] // IEEE Radar Conference (RadarCon). - 2015. - S. 896-900.

Zhu X. X. und Bamler R. A fundamental bound for super-resolution with application to 3D SAR imaging [Konferenz] // Joint Urban Remote Sensing Event. - 2011. - S. 181-184.

## Claims

1. A method for detection and height and azimuth estimation of objects in a scene by radar processing using sparse reconstruction, in particular for driving assistance systems and autonomous vehicles, wherein

- radar signals are emitted to the scene and radar signals reflected from the scene are received using at least one multi-channel radar sensor or several mutually incoherent multi-channel radar sensors, said radar sensor(s) being arranged on a vehicle moving relative to the scene and comprising a two-dimensional array of Tx and Rx antenna elements with spatial diversity in horizontal and vertical axes,

- measurement signals taken from said mutually incoherent multi-channel radar sensors or taken at different points along an interval of a trajectory of the vehicle are processed to detect objects in the scene and a height and azimuth estimation of one or several detected objects is performed using compressed sensing, the compressed sensing being based on a combination of

- a near-field multipath observation model using at least four paths, which includes predictions of phases and amplitudes for hypotheses of height of the detected object(s) based on ground-reflected path contributions for specular reflections from a flat surface of the emitted and reflected radar signals, for pairs of said Tx and Rx antenna elements of the radar sensor at a given distance from the detected object(s), wherein said four paths include a direct-direct (DD) path: Tx antenna element - target - Rx antenna element, a direct-reflected (DR) path: Tx antenna element - target - ground - Rx antenna element, a reflected-direct (RD) path: Tx antenna element - ground - target - Rx antenna element, and a reflected-reflected (RR) path: Tx antenna element - ground - target - ground - Rx antenna element, and

- a group-sparse estimation model for measurement signals of mutually incoherent arrays of antenna elements or from mutually incoherent measurements taken at different distances from the detected object(s),

wherein in a first alternative the compressed sensing includes at least the following steps:

a. Azimuth estimation of the detected object(s) in each range-Doppler bin, comprising

    i. Processing of the measurement signals to be reconstructed in terms of unknown azimuth bins, including

        - Inputting data of the range-Doppler bin of a given detected object for a set of transmitting and receiving elements horizontally aligned,
        - Compensation to make Doppler equal to 0 if necessary;

    ii. Constructing a sensing matrix for azimuth estimation, including

        - Selection of a grid of hypotheses of azimuth for a specified field of view in azimuth,
        - Defining a multi-path steering vector based on the near-field multipath observation model,
        - Evaluation of said observation model at said grid of hypotheses, assuming an unknown height equal to zero;

    iii. Finding sparse reconstruction to obtain estimates of azimuth by thresholding of absolute values based on established criteria;

b. Height estimation of the detected object(s) in each previously estimated azimuth bin, comprising,

    i. Processing of the measurement signals to be reconstructed in terms of unknown height bins, including

        - Inputting data of the range-Doppler bin of said given detected object for a full set of transmitting and receiving elements available in said two-dimensional array of antenna elements,
        - Compensation to make Doppler equal to 0 if necessary;

    ii. Construction of a sensing matrix for height estimation, including

        - Selection of a grid of hypotheses of height for specified field of view in elevation,
        - Defining a multi-path steering vector based on the near-field multipath observation model,
        - Evaluation of the observation model at said grid of height hypotheses for each azimuth bin, and concatenating them horizontally in the sensing matrix;

    iii. Finding sparse reconstruction to obtain estimate of height by thresholding of absolute values based on established criteria;

and wherein in a second alternative the compressed sensing includes at least the following steps:

a. Processing of the measurement signals to be reconstructed in terms of unknown height and azimuth bins, including

- Inputting data of the range-Doppler bin of a given detected object for a full set of transmitting and receiving elements available in said two-dimensional array of sensor elements,
- Compensation to make Doppler equal to 0 if necessary;

b. Construction of a sensing matrix for azimuth and height estimation, including

- Selection of a grid of combinations of hypotheses of azimuth and height for a specified field of view in azimuth and in elevation,
- Defining a multi-path steering vector based on the near-field multipath observation model,
- Evaluation of said observation model at said grid of hypotheses, and concatenating resulting vectors as columns in the sensing matrix;

c. Finding sparse reconstruction to obtain estimate of height and azimuth by thresholding of absolute values based on established criteria.

2. The method according to claim 1,
**characterized in that**
a matrix transformation is applied through a combiner to the measurement signals, including

- Applying said matrix transformation to the measurement signals from each receiving element through a signal combiner in order to reduce the number of channels prior to sampling or improve the properties of the spatial sampling ambiguity function using the multipath observation model, or
- Applying said matrix transformation after range-Doppler processing for each receiving and transmitting element upon MIMO multiplexing for improving the properties of the spatial ambiguity function, particularly lowering the sidelobes.

3. The method according to claim 1 or 2,
**characterized in that** measurements taken at different points along an interval of a trajectory of the vehicle are combined, comprising

a. Processing of the measurement signals to be reconstructed according to claim 1 at each of said points in the interval of the trajectory of the vehicle, and concatenating resulting signals in a single column, conforming a combined signal along the interval of the trajectory of the vehicle,
b. Construction of the sensing matrix according to claim 1 at each of said points in the interval of the trajectory of the vehicle, and concatenation of resulting matrices in block-diagonal form, conforming a combined sensing matrix along the interval of the trajectory of the vehicle,
c. Finding the sparse reconstruction, including,

- Formulation of a group-sparse reconstruction system in terms of said combined signal and sensing matrix along the interval of the trajectory of the vehicle subject to a group-sparsity constraint or penalty,
- Application of standard group-sparse reconstruction solvers to find reconstruction coefficients,
- Obtaining estimate of height and/or azimuth by thresholding of absolute values based on established criteria.

4. The method according to claim 3,
**characterized in that** the estimation of height and azimuth is performed at several intervals along the trajectory of the vehicle, where the height is estimated at possibly varying azimuth bins and that the sparse reconstruction coefficients of the height obtained at each interval are averaged for the possibly varying azimuth bins corresponding to a common detection of interest over the several intervals to obtain an improved estimation of height.

5. The method according to claim 1 or 2,
**characterized in that**
measurements taken from mutually incoherent multi-channel radar sensors arranged at different heights and/or at different horizontal positions on the vehicle are combined, comprising

a. Processing of the measurement signals to be reconstructed according to claim 1, for each of said radar sensors, and concatenating resulting signals in a single column, conforming a combined signal for said mutually incoherent radar sensors;

b. Construction of the sensing matrix according to claim 1 for each of said mutually incoherent radar sensors, using a transformation of coordinates for the hypotheses if the arrays have different orientations, and concatenating resulting matrices in block-diagonal form, conforming a combined sensing matrix for said mutually incoherent radar sensors;

c. Finding the sparse reconstruction, including,

- Formulation of a group-sparse reconstruction system in terms of said combined signal and sensing matrix for said mutually incoherent radar sensors subject to a group-sparsity constraint or penalty,
- Application of standard group-sparse reconstruction solvers to find reconstruction coefficients,
- Obtaining estimate of height and/or azimuth by thresholding of absolute values based on established criteria.

**6.** The method according to claim 1 or 2,
**characterized in that** measurements taken from mutually incoherent multi-channel radar sensors arranged at different heights on the vehicle are combined, wherein the sensing matrix is constructed according to claim 1 for each mutually incoherent radar sensor, and the resulting matrices are concatenated in vertical form, conforming a combined false-coherency sensing matrix for the mutually incoherent radar sensors, and with sparse reconstruction including,

a. Formulation of standard sparse-reconstruction system, or a group-sparse reconstruction system if combined with the method of claim 3, in terms of said measurement signals and combined false-coherency sensing matrix subject to a group-sparsity constraint or penalty;

b. Application of standard sparse reconstruction solvers to find reconstruction coefficients;

c. Obtaining estimate of height and/or azimuth by thresholding of absolute values based on established criteria.

**7.** The method according to one of claims 1 to 6,
**characterized in that** the sensing matrix is constructed by concatenating as columns, for each hypothesis of height, an evaluation of the near-field steering vector for each of the individual path contributions, and with sparse reconstruction including,

a. Formulation of a group-sparse reconstruction system in terms of said measurement signals and sensing matrix subject to a group-sparsity constraint or penalty,

b. Application of standard group-sparse reconstruction solvers to find reconstruction coefficients,

c. Obtaining estimate of height by thresholding of absolute values based on established criteria.

**8.** The method according to one of claims 1 to 6,
**characterized in that** the sensing matrix is constructed by additionally selecting a set of hypothesis for the reflection coefficient of said specular reflections and concatenating as columns, for each combination of hypotheses of reflection coefficient and height, an evaluation of the multi-path steering vector, and with sparse reconstruction including,

a. Formulation of a group-sparse reconstruction system in terms of said measurement signals and sensing matrix subject to a group-sparsity constraint or penalty,

b. Application of standard group-sparse reconstruction solvers to find reconstruction coefficients,

c. Obtaining estimate of height by thresholding of absolute values based on established criteria.

**9.** The method according to one of claims 1 to 6,
**characterized in that** the method of parametric dictionary learning is applied for a dictionary parametrized by linear combinations of the near-field steering vectors for individual path contributions for each hypothesis of height, and with sparse reconstruction including,

a. Formulation of a sparse reconstruction system in terms of said measurement signals and parametric dictionary subject to a group-sparsity constraint or penalty,

b. Application of parametric dictionary learning sparse reconstruction techniques to find the parameters of the dictionary and the sparse reconstruction coefficients,

c. Obtaining estimate of height by thresholding of absolute values based on established criteria.

EP 3 588 128 B1

**10.** A radar system comprising

- at least one multi-channel radar sensor, said radar sensor comprising a two-dimensional array of sensor elements with spatial diversity in horizontal and vertical axes, and
- an evaluation unit,

said evaluation unit being adapted to perform the processing of the measurement signals of the at least one radar sensor to detect objects in a scene and the compressed sensing for height and azimuth estimation of one or several detected objects according to the method of one or several of the preceding claims.

**Patentansprüche**

**1.** Verfahren zur Erfassung und Höhen- und Azimutschätzung von Objekten in einer Szene durch Radarverarbeitung unter Verwendung dünnbesetzter Rekonstruktion, insbesondere für Fahrassistenzsysteme und autonome Fahrzeuge, wobei

- Radarsignale in die Szene ausgesendet und von der Szene reflektierte Radarsignale mit Hilfe mindestens eines Mehrkanal-Radarsensors oder mehrerer wechselseitig inkohärenter Mehrkanal-Radarsensoren empfangen werden, wobei der/die Radarsensor(en) auf einem sich relativ zur Szene bewegenden Fahrzeug angeordnet ist/sind und eine zweidimensionale Anordnung von Tx- und Rx-Antennenelementen mit räumlicher Vielfalt in horizontaler und vertikaler Achse umfasst/umfassen,
- Messsignale, die von den wechselseitig inkohärenten Mehrkanal-Radarsensoren oder an verschiedenen Punkten entlang eines Intervalls einer Trajektorie des Fahrzeugs aufgenommen werden, verarbeitet werden, um Objekte in der Szene zu erfassen, und eine Höhen- und Azimutschätzung eines oder mehrerer erfasster Objekte unter Verwendung von komprimierter Erfassung durchgeführt wird, wobei die komprimierte Erfassung basiert auf einer Kombination von
- einem Nahfeld-Mehrwegebeobachtungsmodell unter Verwendung von mindestens vier Pfaden, das Vorhersagen von Phasen und Amplituden für Hypothesen über die Höhe des erfassten Objekts (der erfassten Objekte) auf der Grundlage von bodenreflektierten Pfadbeiträgen für spiegelnde Reflexionen von einer flachen Oberfläche der ausgesendeten und reflektierten Radarsignale für Paare der Tx- und Rx-Antennenelemente des Radarsensors in einem gegebenen Abstand vom erfassten Objekt (von erfassten Objekten) enthält, wobei die vier Pfade einen direkt-direkten (DD) Pfad umfassen:

Tx-Antennenelement - Ziel - Rx-Antennenelement, einen direkt-reflektierten (DR) Pfad: Tx-Antennenelement - Ziel - Boden - Rx-Antennenelement, einen reflektiertdirekten (RD) Pfad: Tx-Antennenelement - Boden - Ziel - Rx-Antennenelement und einen reflektiert-reflektierten (RR) Pfad: Tx-Antennenelement - Boden - Ziel - Boden - Rx-Antennenelement, und

- ein gruppen-dünnbesetztes Schätzmodell für Messsignale aus wechselseitig inkohärenten Feldern von Antennenelementen oder aus wechselseitig inkohärenten Messungen, die in unterschiedlichen Abständen zu dem/den erfassten Objekt(en) durchgeführt wurden,

wobei in einer ersten Alternative die komprimierte Erfassung zumindest die folgenden Schritte umfasst:

a. Azimutale Schätzung des/der erfassten Objekts/Objekte in jedem Range-Doppler Bin, umfassend

i. Verarbeitung der zu rekonstruierenden Messsignale in Bezug auf unbekannte Azimut Bins, einschließlich

- Eingabe von Daten des Range-Doppler Bins eines bestimmten erfassten Objekts für eine Gruppe von horizontal ausgerichteten Sende- und Empfangselementen,
- Kompensation, um Doppler gleich 0 zu machen, falls erforderlich;

ii. Erstellung einer Erfassungsmatrix für die Azimutschätzung, einschließlich

- Auswahl eines Rasters von Azimut-Hypothesen für ein bestimmtes Sichtfeld im Azimut,
- Definition eines Mehrwege-Lenkungsvektors auf der Grundlage des Nahfeld-Mehrwegebeobachtungsmodells,

- Auswertung des genannten Beobachtungsmodells auf dem genannten Hypothesenraster unter der Annahme einer unbekannten Höhe gleich null;

iii. Suche nach einer dünnbesetzten Rekonstruktion, um Schätzungen des Azimuts durch Schwellenwertbildung absoluter Werte auf der Grundlage festgelegter Kriterien zu erhalten;

b. Höhenschätzung des/der detektierten Objekts/Objekte in jedem zuvor geschätzten Azimut Bin, umfassend,

i. Verarbeitung der zu rekonstruierenden Messsignale in Form von unbekannten Höhen Bins, einschließlich

- Eingabe von Daten des Range-Doppler Bins des gegebenen erfassten Objekts für einen vollständigen Satz von Sende und Empfangselementen, die in dem zweidimensionalen Array von Antennenelementen verfügbar sind,
- Kompensation, um Doppler gleich 0 zu machen, falls erforderlich;

ii. Erstellung einer Erfassungsmatrix für die Höhenschätzung, einschließlich

- Auswahl eines Rasters von Höhenhypothesen für ein bestimmtes Sichtfeld in der Höhe,
- Definition eines Mehrwege-Lenkungsvektors auf der Grundlage des Nahfeld-Mehrwegebeobachtungsmodells,
- Auswertung des Beobachtungsmodells auf dem genannten Raster von Höhenhypothesen für jedes Azimut Bin und deren horizontale Verkettung in der Erfassungsmatrix;

iii. Suche nach einer dünnbesetzten Rekonstruktion, um eine Schätzung der Höhe durch Schwellenwertbildung von absoluten Werten auf der Grundlage festgelegter Kriterien zu erhalten;

und wobei in einer zweiten Alternative das komprimierte Abtasten mindestens die folgenden Schritte umfasst:

a. Verarbeitung der zu rekonstruierenden Messsignale in Form von unbekannten Höhen- und Azimut Bins, einschließlich

- Eingabe von Daten des Range-Doppler Bins eines bestimmten erfassten Objekts für einen vollständigen Satz von Sende- und Empfangselementen, die in der zweidimensionalen Anordnung von Sensorelementen verfügbar sind,
- Kompensation, um Doppler gleich 0 zu machen, falls erforderlich;

b. Konstruktion einer Erfassungsmatrix für Azimut- und Höhenschätzung, einschließlich

- Auswahl eines Rasters von Kombinationen von Azimut- und Höhenhypothesen für ein bestimmtes Sichtfeld in Azimut und Elevation,
- Definition eines Mehrwege-Lenkungsvektors auf der Grundlage des Nahfeld-Mehrwege-beobachtungsmodells,
- Auswertung des Beobachtungsmodells auf dem Hypothesenraster und Verkettung der resultierenden Vektoren als Spalten in der Erfassungsmatrix;

c. Suche nach einer dünnbesetzten Rekonstruktion, um eine Schätzung der Höhe und des Azimuts durch Schwellenwertbildung von absoluten Werten auf der Grundlage von festgelegten Kriterien zu erhalten.

2. Verfahren nach Anspruch 1,
   **dadurch gekennzeichnet, dass**
   eine Matrixtransformation über einen Kombinierer auf die Messsignale angewendet wird, einschließlich

   - Anwenden der Matrixtransformation auf die Messsignale von jedem Empfangselement durch einen Signalkombinierer, um die Anzahl der Kanäle vor der Abtastung zu reduzieren oder die Eigenschaften der räumlichen Abtastmehrdeutigkeitsfunktion unter Verwendung des Mehrwege-Beobachtungsmodells zu verbessern, oder
   - Anwendung der Matrixtransformation nach der Range-Doppler-Verarbeitung für jedes empfangende und sendende Element beim MIMO-Multiplexen zur Verbesserung der Eigenschaften der räumlichen Mehrdeutigkeitsfunktion, insbesondere zur Verringerung der Nebenkeulen.

3. Verfahren nach Anspruch 1 oder 2,
**dadurch gekennzeichnet, dass** Messungen, die an verschiedenen Punkten entlang eines Intervalls einer Bewegungsbahn des Fahrzeugs vorgenommen wurden, kombiniert werden, umfassend

    a. Verarbeitung der zu rekonstruierenden Messsignale gemäß Anspruch 1 an jedem der Punkte im Intervall der Bewegungsbahn des Fahrzeugs und Verkettung der sich ergebenden Signale in einer einzigen Spalte, wodurch ein kombiniertes Signal entlang des Intervalls der Bewegungsbahn des Fahrzeugs entsteht,
    b. Erstellung der Erfassungsmatrix nach Anspruch 1 an jedem der Punkte im Intervall der Bewegungsbahn des Fahrzeugs und Verkettung der sich ergebenden Matrizen in Block-Diagonal-Form, wodurch eine kombinierte Erfassungsmatrix entlang des Intervalls der Bewegungsbahn des Fahrzeugs entsteht,
    c. Ermittlung der dünnbesetzten Rekonstruktion, einschließlich

        - Formulierung eines gruppen-dünnbesetzten Rekonstruktionssystems in Form der kombinierten Signal- und Erfassungsmatrix entlang des Intervalls der Bewegungsbahn des Fahrzeugs, die einer Gruppen-Dünnbesetzungsbedingung oder Strafe unterliegt,
        - Anwendung standardmäßiger gruppen-dünnbesetzter Rekonstruktionslöser zur Ermittlung von Rekonstruktionskoeffizienten,
        - Schätzung der Höhe und/oder des Azimuts durch Schwellenwertbildung von absoluten Werten auf der Grundlage festgelegter Kriterien.

4. Verfahren nach Anspruch 3,
**dadurch gekennzeichnet, dass** die Schätzung von Höhe und Azimut in mehreren Intervallen entlang der Bewegungsbahn des Fahrzeugs durchgeführt wird, wobei die Höhe in möglicherweise variierenden Azimut Bins geschätzt wird, und dass die in jedem Intervall erhaltenen dünnbesetzten Rekonstruktionskoeffizienten der Höhe für die möglicherweise variierenden Azimut Bins gemittelt werden, entsprechend einer gemeinsamen Erfassung von Interesse über die mehreren Intervalle, um eine verbesserte Schätzung der Höhe zu erhalten.

5. Verfahren nach Anspruch 1 oder 2,
**dadurch gekennzeichnet, dass**
Messungen von wechselseitig inkohärenten Mehrkanal-Radarsensoren, die in unterschiedlichen Höhen und/oder an unterschiedlichen horizontalen Positionen am Fahrzeug angeordnet sind, kombiniert werden, umfassend

    a. Verarbeitung der zu rekonstruierenden Messsignale nach Anspruch 1 für jeden der Radarsensoren und Verkettung der resultierenden Signale in einer einzigen Spalte, wodurch ein kombiniertes Signal für die wechselseitig inkohärenten Radarsensoren erhalten wird;
    b. Konstruktion der Erfassungsmatrix nach Anspruch 1 für jeden der wechselseitig inkohärenten Radarsensoren unter Verwendung einer Koordinatentransformation für die Hypothesen, wenn die Arrays unterschiedliche Orientierungen haben, und Verkettung der sich ergebenden Matrizen in Block-Diagonal-Form, wodurch eine kombinierte Erfassungsmatrix für die wechselseitig inkohärenten Radarsensoren erhalten wird;
    c. Ermittlung der dünnbesetzten Rekonstruktion, einschließlich

        - Formulierung eines gruppen-dünnbesetzten Rekonstruktionssystems in Form der kombinierten Signal- und Erfassungsmatrix für die wechselseitig inkohärenten Radarsensoren, die einer Gruppen-Dünnbesetzungsbedingung oder Strafe unterliegt,
        - Anwendung standardmäßiger gruppen-dünnbesetzter Rekonstruktionslöser zur Ermittlung von Rekonstruktionskoeffizienten,
        - Schätzung der Höhe und/oder des Azimuts durch Schwellenwertbildung von absoluten Werten auf der Grundlage festgelegter Kriterien.

6. Verfahren nach Anspruch 1 oder 2,
**dadurch gekennzeichnet, dass** Messungen von wechselseitig inkohärenten Mehrkanal-Radarsensoren, die in verschiedenen Höhen auf dem Fahrzeug angeordnet sind, kombiniert werden, wobei die Erfassungsmatrix für jeden wechselseitig inkohärenten Radarsensor gemäß Anspruch 1 konstruiert wird und die sich ergebenden Matrizen in vertikaler Form verkettet werden, wodurch eine kombinierte Falschkohärenz-Erfassungsmatrix für die wechselseitig inkohärenten Radarsensoren erhalten wird, und mit dünnbesetzter Rekonstruktion einschließlich

    a. Formulierung eines dünnbesetzten Standard-Rekonstruktionssystems oder eines gruppen-dünnbesetzten Rekonstruktionssystems, wenn es mit dem Verfahren nach Anspruch 3 kombiniert ist, in Form der Messsignale und der kombinierten Falschkohärenz-Erfassungsmatrix, die einer Gruppen-Dünnbesetzungsbedingung oder Strafe unterliegt;

b. Anwendung von dünnbesetzten Standard-Rekonstruktionslösern, um Rekonstruktionskoeffizienten zu finden;

c. Schätzung der Höhe und/oder des Azimuts durch Schwellenwertbildung von absoluten Werten auf der Grundlage festgelegter Kriterien.

7. Verfahren nach einem der Ansprüche 1 bis 6,
**dadurch gekennzeichnet, dass** die Erfassungsmatrix konstruiert wird, indem für jede Höhenhypothese eine Auswertung des Nahfeld-Lenkungsvektors für jeden der einzelnen Pfadbeiträge als Spalten verkettet wird, und mit dünnbesetzter Rekonstruktion einschließlich

a. Formulierung eines gruppen-dünnbesetzten Rekonstruktionssystems in Bezug auf die Messsignale und die Erfassungsmatrix, das einer Gruppen-Dünnbesetzungsbedingung oder Strafe unterliegt,

b. Anwendung standardmäßiger gruppen-dünnbesetzter Rekonstruktionslöser zur Ermittlung von Rekonstruktionskoeffizienten,

c. Ermittlung einer Schätzung der Höhe durch Schwellenwertbildung von absoluten Werten auf der Grundlage festgelegter Kriterien.

8. Verfahren nach einem der Ansprüche 1 bis 6,
**dadurch gekennzeichnet, dass** die Erfassungsmatrix konstruiert wird, indem zusätzlich ein Satz von Hypothesen für den Reflexionskoeffizienten der spiegelnden Reflexionen ausgewählt wird und für jede Kombination von Hypothesen des Reflexionskoeffizienten und der Höhe eine Bewertung des Mehrwege-Lenkungsvektors als Spalten verkettet wird, und mit einer dünnbesetzten Rekonstruktion einschließlich

a. Formulierung eines gruppen-dünnbesetzten Rekonstruktionssystems in Bezug auf die Messsignale und die Erfassungsmatrix, die einer Gruppen-Dünnbesetzungsbedingung oder Strafe unterliegt,

b. Anwendung standardmäßiger gruppen-dünnbesetzter Rekonstruktionslöser zur Ermittlung von Rekonstruktionskoeffizienten,

c. Ermittlung einer Schätzung der Höhe durch Schwellenwertbildung von absoluten Werten auf der Grundlage festgelegter Kriterien.

9. Verfahren nach einem der Ansprüche 1 bis 6,
**dadurch gekennzeichnet, dass** das Verfahren des parametrischen Wörterbuchlernens für ein durch Linearkombinationen der Nahfeld-Lenkungsvektoren parametrisiertes Wörterbuch für individuelle Pfadbeiträge für jede Höhenhypothese angewendet wird, und mit dünnbesetzter Rekonstruktion einschließlich

a. Formulierung eines dünnbesetzten Rekonstruktionssystems in Bezug auf die genannten Messsignale und ein parametrisches Wörterbuch, die einer Gruppen-Dünnbesetzungsbedingung oder Strafe unterliegt,

b. Anwendung parametrischer Wörterbuch-Lerntechniken zur dünnbesetzten Rekonstruktion, um die Parameter des Wörterbuchs und die dünnbesetzten Rekonstruktionskoeffizienten zu finden,

c. Ermittlung der Schätzung der Höhe durch Schwellenwertbildung von absoluten Werten auf der Grundlage festgelegter Kriterien.

10. Radarsystem, umfassend

- mindestens einen Mehrkanal-Radarsensor, wobei der Radarsensor eine zweidimensionale Anordnung von Sensorelementen mit räumlicher Vielfalt in horizontaler und vertikaler Achse umfasst, und
- eine Auswerteeinheit,

wobei die Auswerteeinheit geeignet ist, die Verarbeitung der Messsignale des mindestens einen Radarsensors zur Detektion von Objekten in einer Szene und die komprimierte Erfassung zur Höhen- und Azimutschätzung eines oder mehrerer detektierter Objekte nach dem Verfahren eines oder mehrerer der vorhergehenden Ansprüche durchzuführen.

**Revendications**

1. Procédé de détection et d'estimation de hauteur et d'azimut d'objets dans une scène par traitement radar utilisant une reconstruction sporadique, en particulier pour des systèmes d'aide à la conduite et des véhicules autonomes, dans lequel

- des signaux radar sont émis vers la scène et des signaux radar réfléchis par la scène sont reçus à l'aide d'au moins un capteur de radar multicanaux ou de plusieurs capteurs de radar multicanaux incohérents entre eux, ledit ou lesdits capteurs de radar étant disposés sur un véhicule se déplaçant par rapport à la scène et comprenant un réseau bidimensionnel d'éléments d'antenne Tx et Rx à diversité spatiale dans les axes horizontal et vertical,
- des signaux de mesure provenant desdits capteurs de radar multicanaux mutuellement incohérents ou pris à différents points le long d'un intervalle d'une trajectoire du véhicule sont traités pour détecter des objets dans la scène et une estimation de la hauteur et de l'azimut d'un ou plusieurs objets détectés est effectuée en utilisant une détection compressée, la détection compressée étant basée sur une combinaison de
- un modèle d'observation par trajets multiples en champ proche utilisant au moins quatre trajets, qui comprend des prédictions de phases et d'amplitudes pour des hypothèses de hauteur du ou des objets détectés sur la base des contributions de trajectoires réfléchies par le sol pour des réflexions spéculaires à partir d'une surface plane des signaux radar réfléchis et émis, pour des paires desdits éléments d'antenne Tx et Rx du capteur de radar à une distance donnée du ou des objets détectés, dans lequel lesdits quatre trajets comprennent un trajet direct-direct (DD) :

elément d'antenne Tx - cible - élément d'antenne Rx,

un trajet réfléchi-direct (DR) ;

elément d'antenne Tx - cible - masse - élément d'antenne Rx, un trajet réfléchi-direct (RD) : élément d'antenne Tx - masse - cible - élément d'antenne Rx,

et un trajet réfléchi-réfléchi (RR) : élément d'antenne Tx - masse - cible - masse - élément d'antenne Rx, et

- un modèle d'estimation de groupe sporadique pour les signaux de mesure de réseaux d'éléments d'antenne mutuellement incohérents ou de mesures mutuellement incohérentes prises à différentes distances du ou des objets détectés,

dans lequel, dans une première alternative, la détection compressée comprend au moins les étapes suivantes :

a. estimation d'azimut du ou des objets détectés dans chaque case distance-Doppler, comprenant

i. traitement des signaux de mesure à reconstruire en termes de cases d'azimuts inconnus, y compris

- saisie des données de la case distance-Doppler d'un objet détecté donné pour un ensemble d'éléments émetteurs et récepteurs alignés horizontalement,
- compensation pour rendre le Doppler égal à 0 si nécessaire ;

ii. Construction d'une matrice de détection pour l'estimation de l'azimut, y compris

- sélection d'une grille d'hypothèses d'azimut pour un champ de vision spécifié en azimut,
- définition d'un vecteur de direction multi-trajets basé sur le modèle d'observation multi-trajets en champ proche,
- évaluation dudit modèle d'observation au niveau de ladite grille d'hypothèses en supposant une hauteur inconnue égale à zéro ;

iii. trouver une reconstruction sporadique pour obtenir des estimations d'azimut par seuillage de valeurs absolues en fonction de critères établis ;

b. estimation de la hauteur du ou des objets détectés dans chaque case d'azimut précédemment estimée, comprenant,

i. traitement des signaux de mesure à reconstruire en termes de cases de hauteur inconnue comprenant

- saisie des données de la case distance-Doppler dudit objet détecté donné pour un ensemble complet d'éléments émetteurs et récepteurs disponibles dans ledit réseau bidimensionnel d'éléments d'antenne,
- compensation pour rendre le Doppler égal à 0 si nécessaire ;

ii. construction d'une matrice de détection pour l'estimation de la hauteur, y compris

- sélection d'une grille d'hypothèses de hauteur pour un champ de vision spécifié en élévation,
- définition un vecteur de guidage multi-trajets basé sur le modèle d'observation multi-trajets en champ proche,
- évaluation du modèle d'observation au niveau de ladite grille d'hypothèses de hauteur pour chaque case d'azimut, et concaténation horizontale de celles-ci dans la matrice de détection ;

iii. trouver une reconstruction sporadique pour obtenir une estimation de la hauteur par seuillage de valeurs absolues en fonction de critères établis

et dans lequel, dans une deuxième alternative, la détection compressée comprend au moins les étapes suivantes :

a. traitement des signaux de mesure à reconstruire en termes de cases de hauteur et d'azimut inconnus, y compris

- saisie des données de la case distance-Doppler d'un objet détecté donné pour un ensemble complet d'éléments émetteurs et récepteurs disponibles dans ledit réseau bidimensionnel d'éléments de capteurs,
- compensation pour rendre le Doppler égal à 0 si nécessaire ;

b. construction d'une matrice de détection pour l'estimation d'azimut et de hauteur, y compris

- sélection d'une grille de combinaisons d'hypothèses d'azimut et de hauteur pour un champ de vision spécifié en azimut et en élévation
- définition d'un vecteur de guidage multi-trajets basé sur le modèle d'observation multi-trajets en champ proche,
- évaluation dudit modèle d'observation au niveau de ladite grille d'hypothèses, et concaténation des vecteurs résultants en colonnes dans la matrice de détection,

c. trouver une reconstruction sporadique pour obtenir une estimation de la hauteur et de l'azimut par seuillage des valeurs absolues en fonction des critères établis.

2. Procédé selon la revendication 1, **caractérisé en ce qu'**une transformation matricielle est appliquée par l'intermédiaire d'un combinateur aux signaux de mesure, comprenant

- l'application de ladite transformation matricielle aux signaux de mesure de chaque élément récepteur par l'intermédiaire d'un combinateur de signaux afin de réduire le nombre de canaux avant échantillonnage ou d'améliorer les propriétés de la fonction d'ambiguïté d'échantillonnage spatial à l'aide du modèle d'observation par trajets multiples, ou
- l'application de ladite transformation matricielle après un traitement distance-Doppler pour chaque élément récepteur et émetteur lors d'un multiplexage MIMO pour améliorer les propriétés de la fonction d'ambiguïté spatiale, notamment abaisser les lobes secondaires.

3. Procédé selon la revendication 1 ou 2, **caractérisé en ce que** des mesures prises en différents points le long d'un intervalle d'une trajectoire du véhicule sont combinées, comprenant

a. traitement des signaux de mesure à reconstruire selon la revendication 1 en chacun desdits points dans l'intervalle de la trajectoire du véhicule, et concaténation des signaux résultants dans une seule colonne, en conformant un signal combiné le long de l'intervalle de la trajectoire du véhicule
b. construction de la matrice de détection selon la revendication 1 en chacun desdits points dans l'intervalle de la trajectoire du véhicule, et concaténation des matrices résultantes sous forme de bloc-diagonale, en conformant une matrice de détection combinée le long de l'intervalle de la trajectoire du véhicule,
c. trouver la reconstruction sporadique, y compris,

- formulation d'un système de reconstruction de groupe sporadique en termes dudit signal combiné et de matrice de détection le long de l'intervalle de la trajectoire du véhicule soumis à une contrainte ou à une pénalité de sporadicité de groupe,
- application de solveurs de reconstruction de groupe sporadique standard pour trouver des coefficients de reconstruction
- obtention d'une estimation de hauteur et/ou d'azimut par seuillage de valeurs absolues en fonction de critères établis.

4. Procédé selon la revendication 3, **caractérisé en ce que** l'estimation de hauteur et d'azimut est effectuée à plusieurs intervalles le long de la trajectoire du véhicule, où la hauteur est estimée à des cases d'azimut éventuellement variables et que les coefficients de reconstruction sporadiques de la hauteur obtenus à chaque intervalle sont moyennés pour les cases d'azimut éventuellement variables correspondant à une détection commune d'intérêt sur les plusieurs intervalles pour obtenir une estimation améliorée de la hauteur.

5. Procédé selon la revendication 1 ou 2, **caractérisé en ce que** des mesures prises à partir de capteurs de radar multicanaux mutuellement incohérents disposés à différentes hauteurs et/ou à différentes positions horizontales sur le véhicule sont combinées, comprenant

   a. traitement des signaux de mesure à reconstruire selon la revendication 1, pour chacun desdits capteurs de radar, et concaténation des signaux résultants dans une seule colonne, en conformant un signal combiné pour lesdits capteurs de radar mutuellement incohérents ;
   b. construction de la matrice de détection selon la revendication 1 pour chacun desdits capteurs de radar mutuellement incohérents, en utilisant une transformation de coordonnées pour les hypothèses si les réseaux ont des orientations différentes, et en concaténant les matrices résultantes sous forme de diagonale par blocs, en conformant une matrice de détection combinée pour ledit capteurs de radar mutuellement incohérents ;
   c. trouver la reconstruction sporadique, y compris

   - formulation d'un système de reconstruction de groupe sporadique en termes dudit signal combiné et de la matrice de détection pour lesdits capteurs de radar mutuellement incohérents soumis à une contrainte ou à une pénalité de sporadicité de groupe,
   - application de solveurs de reconstruction de groupe sporadique standard pour trouver des coefficients de reconstruction,
   - obtention d'une estimation de hauteur et/ou d'azimut par seuillage de valeurs absolues en fonction de critères établis.

6. Procédé selon la revendication 1 ou 2, **caractérisé en ce que** des mesures prises à partir de capteurs de radar multicanaux mutuellement incohérents disposés à différentes hauteurs sur le véhicule sont combinées, dans lequel la matrice de détection est construite selon la revendication 1 pour chaque capteur de radar mutuellement incohérent, et les matrices résultantes sont concaténées sous forme verticale, en conformant une matrice de détection de fausse cohérence combinée pour les capteurs de radar mutuellement incohérents, et avec une reconstruction sporadique comprenant,

   a. formulation d'un système standard de reconstruction sporadique, ou d'un système de reconstruction sporadique de groupes s'il est combiné avec le procédé de la revendication 3, en termes desdits signaux de mesure et de la matrice de détection de fausse cohérence combinée soumise à une contrainte ou pénalité de sporadicité de groupes ;
   b. application de solveurs de reconstruction sporadique standard pour trouver des coefficients de reconstruction,
   c. obtention d'une estimation de hauteur et/ou d'azimut par seuillage de valeurs absolues en fonction de critères établis.

7. Procédé selon une des revendications 1 à 6 **caractérisé en ce que** la matrice de détection est construite en concaténant en colonnes, pour chaque hypothèse de hauteur, une évaluation du vecteur d'orientation en champ proche pour chacune des contributions de trajectoire individuelles, et avec une reconstruction sporadique comprenant

   a. formulation d'un système de reconstruction de groupe sporadique en termes desdits signaux de mesure et d'une matrice de détection soumise à une contrainte ou pénalité de sporadicité de groupe,
   b. application de solveurs de reconstruction de groupe sporadique standard pour trouver des coefficients de reconstruction,
   c. obtention d'une estimation de hauteur par seuillage de valeurs absolues en fonction de critères établis.

8. Procédé selon une des revendications 1 à 6, **caractérisé en ce que** la matrice de détection est construite en sélectionnant en outre un jeu d'hypothèses pour le coefficient de réflexion desdites réflexions spéculaires et en concaténant en colonnes, pour chaque combinaison d'hypothèses de coefficient de réflexion et de hauteur, une évaluation du vecteur de guidage multi-trajets, et avec une reconstruction éparse comprenant,

   a. formulation d'un système de reconstruction de groupe sporadique en termes desdits signaux de mesure et d'une matrice de détection soumise à une contrainte ou pénalité de sporadicité de groupe,
   b. application de solveurs de reconstruction standard de groupe sporadique pour trouver des coefficients de reconstruction,
   c. obtention d'une estimation de hauteur par seuillage de valeurs absolues en fonction de critères établis.

9. Procédé selon une des revendications 1 à 6 **caractérisé en ce que** le procédé d'apprentissage par dictionnaire paramétrique est appliqué pour un dictionnaire paramétré par des combinaisons linéaires des vecteurs directeurs en champ proche pour des contributions de trajectoire individuelles pour chaque hypothèse de hauteur, et avec reconstruction sporadique comprenant,

   a. formulation d'un système de reconstruction sporadique en fonction desdits signaux de mesure et d'un dictionnaire paramétrique soumis à une contrainte ou pénalité de sporadicité de groupe,
   b. application des techniques de reconstruction sporadique par apprentissage par dictionnaire paramétrique pour trouver les paramètres du dictionnaire et les coefficients de reconstruction sporadique,
   c. obtention d'une estimation de hauteur par seuillage de valeurs absolues en fonction de critères établis.

10. Système radar comprenant

   - au moins un capteur de radar multicanaux, ledit capteur de radar comprenant un réseau bidimensionnel d'éléments de capteurs à diversité spatiale dans les axes horizontal et vertical, et
   - une unité d'évaluation,

   ladite unité d'évaluation étant adaptée pour effectuer le traitement des signaux de mesure du au moins un capteur de radar pour détecter des objets dans une scène et la détection compressée pour l'estimation de la hauteur et de l'azimut d'un ou plusieurs objets détectés selon le procédé d'une ou plusieurs des revendications précédentes.

Fig. 1

Fig. 2A

Fig. 2B

Fig. 2C

Fig. 3

Obstacle
$(d_x, d_y)$

$\{p_1, \ldots, p_I\}$

Ego
vehicle

Filtering
interval j

Fig. 4A

Obstacle
$(d_x, \mathrm{h})$

$\{p_1, \ldots, p_I\}$

Filtering
interval j

Fig. 4B

Detected
azimuth bins
$$\Phi_j := \left\{ \phi_{1,j}, \dots \phi_{n_j,j} \right\}$$

Azimuth estimation using
step-by-step or group-sparse
fusion at set of points
$$\mathcal{P}_j := \left\{ p_j^{(1)}, \dots, p_j^{(I_j)} \right\}$$
at filtering interval j

Height est. of
azimuth bins $\Phi_j$
with measurements
at $\mathcal{P}_j$ of full virtual
array

Estimates of height
at each azimuth bin
$$\left\{ h_1^{\phi_{1,j}}, \dots, h_{m_{\phi_{1,j}}}^{\phi_{1,j}}, \dots \right\}$$

Next filtering interval
$$j \leftarrow j + 1$$

Height map at interval $j$
of detected azimuth bins
$$s_{\text{Range}-\text{fusion}_j}^{\text{Height}}$$

Enhanced estimates of height
of relevant detection
$$\{ h_1, \dots, h_m \}$$

Store last J height
maps
$$\left\{ s_{\text{Range}-\text{fusion}_t}^{\text{Height}} \right\}_{t=j-J}^{j}$$

Select azimuth bins of a
relevant detection
present along J filtering
intervals, $\left\{ \phi_{q_t,t} \right\}_{t=j-J}^{j}$

Moving average at step j of
height map
$$s_{\text{GSMW}_j} = \frac{1}{J} \sum_{t=j-J}^{j} s_{\text{Range}-\text{fusion}_t}^{\text{Height}, (q_t)}$$

Fig. 5

Fig. 6

Fig. 7

Fig. 8A

Fig. 8B

Coordinate frame    FoV 1
Array 1

$\phi_{\text{Array 1}}$                    Detection

$r_1$

$r$

$\gamma$

$r$

$\phi_{\text{Array 2}} = f_{r_1, r_2, \gamma}(\phi_{\text{Array 1}})$

$r_2$

Coordinate frame
Array 2           FoV 2

Fig. 9A

$\phi_1$

$r$

$\dfrac{\pi}{2} + \dfrac{\gamma}{2} - \phi_1$        $r_1$        $\phi_1 + \phi_2 - \gamma$

$\gamma$

$2\, r \sin\left(\dfrac{\gamma}{2}\right)$        $r_2$

$r$

$\dfrac{\pi}{2} + \dfrac{\gamma}{2} - \phi_2$

$\phi_2$

Fig. 9B

42

**EP 3 588 128 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8390507 B2
- US 9274221 B2
- US 9389305 B2

**Non-patent literature cited in the description**

- **S. OLBRICH et al.** A multipath based height estimation of targets for radar systems. *IEEE International Conference on Microwaves for Intelligent Mobility (ICMIM),* 2017, 37-40
- **BARANIUK R. ; STEEGHS P.** Compressive Radar Imaging. *Konferenz] // IEEE Radar Conference,* 2007, 128-133
- **BARANSKY E.** Sub-Nyquist radar prototype: Hardware and algorithm. *Journal] // IEEE Transactions on Aerospace and Electronic Systems,* 2014, 809-822
- **BERG E. VAN DEN ; FRIEDLANDER M. P.** Probing the Pareto frontier for basis pursuit solutions. *Journal] // SIAM J. on Scientific Computing,* 2008, 890-912
- **BERG E. VAN DEN ; FRIEDLANDER M. P.** *SPGL1: A solver for large-scale sparse reconstruction,* 2007, http://www.cs.ubc.ca/labs/scl/spgl1
- **BLUMENSATH T. ; DAVIES M. E.** Gradient Pursuits. *Journal] // IEEE Transactions on Signal Processing,* 2008, 2370-2382
- **BRISKEN S. ; ENDER J.** Block-sparse 3-D ISAR image reconstruction in a non-coherent multistatic scenario. *Konferenz] // IEEE Radar Conference (RadarCon),* vol. 15, 265-269
- **CANDÈS E.J. ; FERNANDEZ-GRANDA C.** Towards a Mathematical Theory of Super-resolution. *Journal] // Communications on Pure and Applied Mathematics,* 2014, 906-956
- **CHEN CHUN-YANG ; VAIDYANATHAN P. P.** Compressed sensing in MIMO radar. *Konferenz] // 42nd Asilomar Conference on Signals, Systems and Computers,* 2008, 41-44
- **CHEN S. S. ; DONOHO D. L. ; SAUNDERS M. A.** Atomic decomposition by basis pursuit. *Journal] // SIAM J. Scientific Computation,* 1998, 33-61
- **CHI Y. T.** Block and Group Regularized Sparse Modeling for Dictionary Learning. *Konferenz] // IEEE Conference on Computer Vision and Pattern Recognition,* 2013, 377-382
- **COTTER S. F.** Sparse solutions to linear inverse problems with multiple measurement vectors. *Journal] // IEEE Trans. on Signal Processing,* 2005, 2477-2488
- **DIEWALD F.** Radar-interference-based bridge identification for collision avoidance systems. *Konferenz] // IEEE Intelligent Vehicles Symposium (IV),* 2011, 113-118
- **DONOHO D. L.** Compressed sensing. *Journal] // IEEE Transactions on Information Theory,* 2006, 1289-1306
- **DUARTE M. F. ; ELDAR Y. C.** Structured Compressed Sensing: From Theory to Applications. *Journal] // IEEE Transactions on Signal Processing,* 2011, 4053-4085
- **EFRON B.** Least angle regression. *Journal] // Annals of Statistics,* 2004, 407-499
- **ELDAR Y. C. ; MISHALI M.** Robust Recovery of Signals From a Structured Union of Subspaces. *Journal] // IEEE Transactions on Information Theory,* 2009, 5302-5316
- **ELDAR Y. C. ; KUPPINGER P. ; BOLCSKEI H.** Block-Sparse Signals: Uncertainty Relations and Efficient Recovery. *Journal] // IEEE Transactions on Signal Processing,* 2010, 3042-3054
- **ENDER J. H. G.** On Compressive Sensing applied to radar. *Journal] // Signal Processing,* 2010, 1402-1414
- **ENGELS F.** Advances in Automotive Radar: A framework on computationally efficient high-resolution frequency estimation. *Journal] // IEEE Signal Processing Magazine,* 2017, 36-46
- **ENGELS F. ; WINTERMANTEL M. ; HEIDENREICH P.** Automotive MIMO radar angle estimation in the presence of multipath. *Konferenz] // European Radar Conference (EURAD),* 2017, 82-85
- **FORTUNATI S.** Single snapshot DOA estimation using Compressed sensing. *Konferenz] // IEEE International Conference on Acoustics, Speech and Signal Processing (ICASSP),* 2014, 2297-2301

- **GONZÁLEZ-HUICI M. A.** Constrained optimal design of automotive radar arrays using the Weiss-Weinstein bound. *Konferenz] // International Conference on Microwaves for Intelligent Mobility (ICMIM),* 2018
- **GORODNITSKY I. F. ; RAO B. D.** Sparse signal reconstruction from limited data using FOCUSS: A re-weighted minimum norm algorithm. *Journal] // IEEE Trans. on Signal Processing,* 1997, 2477-2488
- **GRIBONVAL R. ; CHARDON G. ; L.DAUDET.** Blind Calibration For Compressed Sensing By Convex Optimization. *Konferenz] // IEEE International Conference on Acoustics, Speech, and Signal Processing,* 2012
- **HERMAN M. A. ; STROHMER T.** High-Resolution Radar via Compressed Sensing. *Journal] // IEEE Transactions on Signal Processing,* 2009, 2275-2284
- **HERMAN M. ; STROHMER T.** Compressed sensing radar. *Konferenz] // IEEE International Conference on Acoustics, Speech and Signal Processing,* 2008, 1509-1512
- **HUANG J. ; ZHANG T.** The benefit of group sparsity. *Journal] // The Annals of Statistics,* 2010, 1978-2004
- **IBRAHIM M. ; ROEMER F. ; GALDO G. DEL.** On the design of the measurement matrix for Compressed Sensing based DOA estimation. *Journal] // IEEE International Conference on Acoustics, Speech and Signal Processing (ICASSP),* 2015, 3631-3635
- **JI S. ; DUNSON D. ; CARIN L.** Multitask Compressive Sensing. *Journal] // IEEE Transactions on Signal Processing,* 2009, 92-106
- **KNOTT E. F.** *Radar Cross Section Measurements [Buch,* 1993
- **LARIBI A.** A new height-estimation method using FMCW radar Doppler beam sharpening. *Konferenz] // European Signal Processing Conference (EUSIPCO),* 2017, 1932-1396
- **LARIBI A.** Vertical digital beamforming versus multipath height finding. *Konferenz] // IEEE International Conference on Microwaves for Intelligent Mobility (ICMIM),* 2017, 99-102
- **LARIBI A.** Vertical Doppler Beam Sharpening Goes Self Parking. *Konferenz] // IEEE Radar Conference,* 2018
- **MALLAT S. G. ; ZHANG Z.** Matching pursuits with time-frequency dictionaries. *Journal] // IEEE Transactions on Signal Processing,* 1993, 3397-3415
- **OLBRICH S. ; WALDSCHMIDT C.** A multipath based height estimation of targets for radar systems. *Konferenz] // IEEE International Conference on Microwaves for Intelligent Mobility (ICMIM),* 2017, 37-40
- **PATI Y. C. ; REZAIIFAR R. ; KRISHNAPRASAD P. S.** Orthogonal matching pursuit: recursive function approximation with applications to wavelet decomposition. *Konferenz] // Proceedings of 27th Asilomar Conference on Signals, Systems and Computers,* 1993, 40-44
- **ROSSI M. ; HAIMOVICH A. M. ; ELDAR Y. C.** Spatial Compressive Sensing for MIMO Radar. *Journal] // IEEE Transactions on Signal Processing,* 2014, 419-430
- **SUBEDI S.** Group Sparsity Based Multi-Target Tracking in Passive Multi-Static Radar Systems Using Doppler-Only Measurements. *Journal] // IEEE Transactions on Signal Processing,* 2016, 3619-3634
- **TIBSHIRANI R.** Regression shrinkage and selection via the Lasso. *Journal] // Journal of the Royal Statistical Society. Series B,* 1996, 267-288
- **UYSAL F. ; SELESNICK I. ; ISOM B. M.** Mitigation of Wind Turbine Clutter for Weather Radar by Signal Separation. *Journal] // IEEE Trans. on Geoscience and remote sensing,* 2016, 2925-2934
- **WEIß M.** Group Sparsity Techniques for Data Fusion of a passive MISO Radar Network. *Konferenz] // 17th International Radar Symposium (IRS),* 2016, 1-5
- **WU SHUN-JUN ; ZHANG L. ; XING M. D.** Super-resolution ISAR imaging via statistical compressive sensing. *Konferenz] // Proceedings of 2011 IEEE CIE International Conference on Radar,* 2011, 545-550
- **YU Y. ; PETROPULU A. P. ; POOR H. V.** Measurement Matrix Design for Compressive Sensingbased MIMO Radar. *Journal] // IEEE Transactions on Signal Processing,* 2011, 5338-5352
- **ZHANG Y. D.** Multi-sensor kernel design for time-frequency analysis of sparsely sampled nonstationary signals. *Journal] // IEEE Radar Conference (RadarCon),* 2015, 896-900
- **ZHU X. X. ; BAMLER R.** A fundamental bound for super-resolution with application to 3D SAR imaging. *Konferenz] // Joint Urban Remote Sensing Event,* 2011, 181-184